# EUROPEAN PATENT SPECIFICATION

(11) **EP 2 654 256 B1**
(45) Date of publication and mention of the grant of the patent: **13.05.2015**
(21) Application number: 13157548.2
(22) Date of filing: 04.03.2013
(51) Int. Cl.: H04L 12/701

(54) **Transport system, central control computer, and transport method**
Transportsystem, zentraler Steuerungscomputer und Transportverfahren
Système de transport, ordinateur central de commande et procédé de transport

(30) Priority: 17.04.2012 JP 2012094010
(43) Date of publication of application: 23.10.2013
(73) Proprietor: Hitachi, Ltd., Chiyoda-ku Tokyo 100-8280 (JP)
(72) Inventor: Mashimo, Daisuke, Tokyo, 100-8220 (JP); Takahashi, Kiyotaka, Tokyo, 100-8220 (JP); Shibata, Takeshi, Tokyo, 100-8220 (JP)
(74) Representative: MERH-IP Matias Erny Reichl Hoffmann

(56) References cited:
- US-A1- 2009 285 089
- US-A1- 2011 116 385

## Description

### BACKGROUND OF THE INVENTION

This invention relates to a transport system in which a first communication path constructed in an autonomous and decentralized manner and a second communication path constructed by central control are coupled to each other, and more particularly, to a transport system for checking coupling of a communication path.

A need for communication quality guarantee service for a network is increasing. The communication quality guarantee service is a service which, for a bandwidth and a communication delay requested by a user, a communication path satisfying the requests from the user is constructed in advance on the network side, and provides the constructed communication path.

The Internet Protocol/Multi Protocol Label Switching (IP/MPLS) network has come to be widely used as a conventional backbone network for providing the communication quality guarantee service. In the IP/MPLS network, by distributed control among respective routers constructing each IP/MPLS network, a logical end-to-end communication path satisfying user requests is constructed, and each of the routers transfers a packet not by the IP routing but by the label switching.

On the other hand, as the backbone network for providing the communication quality guarantee service, the number of communication carriers which use the Multi Protocol Label Switching-Transport Profile (MPLS-TP) network has been increasing in recent years. In the MPLS-TP network, the network is managed by central control by a certain server.

The MPLS-TP network managed by the central control can strictly guarantee the communication quality for each request from a user compared with the IP/MPLS network managed by the distributed control, and can provide a communication path excellent in security. In consideration of these advantages, in order to increase the communication quality of an IP service, an interworking technology for constructing a network coupled to user terminals by the conventional IP/MPLS network for restraining the cost, constructing a core network for the IP/MPLS network by the MPLS-TP network, and coupling these network to each other is currently being discussed for standardization.

As means for realizing the interworking for coupling the IP/MPLS network and the MPLS-TP network serving as the core network for the IP/MPLS network to each other, there is a method of controlling the MPLS-TP network to function as a single pseudo IP/MPLS router. This method is hereinafter referred to as pseudo router method.

In the pseudo router method, a central control server managing the MPLS-TP network by means of the central control executes routing protocol processing, label distribution protocol processing, and the like for the IP/MPLS network. Moreover, the central control server sets an IP address to an interface constituted as a coupling point between the MPLS-TP network and the IP/MPLS network. Moreover, the central control server sets to the coupling point a loopback interface, which is a virtual interface in which, to an MPLS-TP device coupled to the IP/MPLS network, an IP address representing the MPLS-TP device itself is set. As a result, an IP/MPLS router, in a pseudo manner, recognizes the entire MPLS-TP network as a single IP/MPLS router.

The central control server constructs an end-to-end communication path by associating a path of the IP/MPLS network and a path of the MPLS-TP network with each other, and setting the correspondence between the paths to an MPLS-TP device constituting the MPLS-TP network. As a result, a load on the IP/MPLS router in calculating a path caused by an increase in the number of neighboring nodes of the IP/MPLS router can be prevented from increasing, and a large-scale system can thus be constructed.

Moreover, as dependency of economic activities on networks increases, a need for reliability of network is increasing. As a result, both for the communication carriers and the users, the operation, administration, and maintenance (OAM) function for recognizing operation states, failures, performances, and the like of the network becomes very important.

As the OAM function used in the IP/MPLS network, for example, there is known an LSP-ping. The LSP-ping is a function for detecting a failure point on a desired communication path. In the LSP-ping, an insertion point (IP/MPLS router as a point from which detection of a failure point starts) transmits a request packet. The request packet includes a router alert label, a label of a path subject to the inspection, and an IP address of an IP/MPLS router as a loopback point. When the IP/MPLS router as the loopback point receives the request packet, the IP/MPLS router transmits a reply packet to the IP/MPLS router as the insertion point. As a result, the coupling between the insertion point to the loopback point can be checked. It is a feature for the LSP-ping to specify the IP/MPLS router as the loopback point by using an IP address.

As the OAM function used in the MPLS-TP network, for example, there is known a loopback (LB). In the LB, the MPLS-TP device as the insertion point transmits an OAM packet having the time to live (TTL) of the shim header, which is referred to in label switching, to which the number of hops from the insertion point to the loopback point is registered. The LB has a feature in that the MPLS-TP device as the loopback point is specified on the MPLS layer.

On this occasion, even when the MPLS-TP network is coupled as a core network for the IP/MPLS networks, in order to increase the reliability of the network, the check of an end-to-end coupling, namely, implementation of the OAM function is required.

However, the IP/MPLS network operates on the IP layer and the MPLS-TP network operates on the MPLS layer, and hence the IP/MPLS network and the MPLS-TP network refer to different layers for the check of the end-to-end coupling. Thus, in a system in which an MPLS-TP network is coupled as a core network for the IP/MPLS networks, the interworking needs to be realized in the OAM function as well as the data transport.

As a conventional technology relating to the OAM function between networks operating based on different protocols, there is known a cooperation technology for the OAM function in a case where the asynchronous transfer mode (ATM) network and the IP/MPLS network interwork (for example, refer to ITU-T Y.1712).

In a technology described in ITU-T Y.1712, when occurrence of a failure is notified of between communication devices, a communication device as a coupling point between networks different in protocol converts an OAM packet prescribed in one protocol to an OAM packet prescribed in the other protocol. As a result, even between the communication devices operating on protocols different from each other, the OAM function can be realized.

In US 2011/116385 A1, a network connectivity management includes monitoring a circuit, wherein the circuit is a virtual connection between multiple networks via a provider core network. A device receives a plurality of network management messages associated with the circuit, and a determination is made regarding whether the circuit is experiencing a connectivity issue based on the network management messages. When it is determined that the circuit is experiencing a connectivity issue, then certain actions can be initiated.

### SUMMARY OF INVENTION

In a system in which an MPLS-TP network is coupled as a core network for IP/MPLS networks by means of the pseudo router method, a network coupled to a user terminal is the IP/MPLS network. Therefore, in this system, in order to check a failure point between ends, the LSP-ping needs to be supported. However, a method of processing the router alert label is not set on the MPLS-TP device, and even when the MPLS-TP device receives a request packet for the LSP-ping, the MPLS-TP device discards the received request packet.

Moreover, the MPLS-TP device cannot process the IP layer, and thus cannot identify a loopback point specified by an IP address. Therefore, the MPLS-TP device cannot determine whether the received request packet is to be transferred to an MPLS-TP device downstream in a path, or a reply packet corresponding to the received request packet is to be returned.

Further, the technology disclosed in ITU-T Y.1712 is intended to notify a communication device as a terminal point of a path of occurrence of a failure between networks using different protocols. Therefore, the technology disclosed in ITU-T Y.1712 cannot detect a failure point from an insertion point to a loopback point when a device in the course of the path is specified as the loopback point as in the LSP-ping or the like.

Therefore, it is an object of this invention to provide a system which includes an MPLS-TP network coupled as a core network for an IP/MPLS network by means of the pseudo router method, and is capable of checking an end-to-end coupling.

According to an aspect of the present invention, there is provided a transport system, comprising: a plurality of transport devices to be coupled to a first communication path which is constructed between a communication device as a start point and a communication device as an end point in an autonomous and decentralized manner by the communication devices using a control packet; and a central control computer for constructing a second communication path in a transport network including the plurality of transport devices, between one of the plurality of transport devices as a start point and one of the plurality of transport devices as an end point, and establishing the first communication path between the communication devices by setting a correspondence between the first communication path and the second communication path to one of the plurality of transport devices constituting the second communication path, wherein: a first communication protocol used for communicating data via the first communication path and a second communication protocol used for communicating data via the second communication path are different from each other; the central control computer is capable of processing the first communication protocol; the central control computer sets, in order that an interface of one of the plurality of transport devices coupled to the communication device is, in a pseudo manner, recognized as an interface of the communication device by a communication device of a coupling destination, identification information on the interface in the first communication protocol to the interface of the one of the plurality of transport devices coupled to the communication device; one of the plurality of transport devices transmits a coupling check request for checking coupling from the communication device to a loopback point to the central control computer, in a case of receiving from the communication device the coupling check request; and the central control computer is configured to: identify the loopback point based on the received coupling check request, in a case of receiving the coupling check request from the one of the plurality of transport devices; instruct, depending on the identified loopback point, the one of the plurality of transport devices constituting the second communication path to check coupling of the second communication path; and transmit, depending on a result of the check of the coupling executed by the one of the plurality of transport devices, a coupling check response to the one of the plurality of transport devices which has transmitted the coupling check request, the coupling check response being a response to the coupling check request to be returned to the communication device which has transmitted the coupling check request.

A brief description is now given of effects provided by the exemplary embodiment of this invention disclosed in this application. This invention enables to provide a system which includes an MPLS-TP network coupled as a core network for an IP/MPLS network by means of the pseudo router method, and is capable of checking an end-to-end coupling.

### BRIEF DESCRIPTION OF THE DRAWINGS

The present invention can be appreciated by the description which follows in conjunction with the following figures, wherein:
FIG. 1 is an explanatory diagram of a configuration of a transport system according to a first embodiment of this invention;
FIG. 2 is an explanatory diagram of a configuration of a MPLS-TP device according to the first embodiment of this invention;
FIG. 3 is an explanatory diagram of a configuration of a central control server according to the first embodiment of this invention;
FIG. 4 is an explanatory diagram of a label information table held by the MPLS-TP device according to the first embodiment of this invention;
FIG. 5 is an explanatory diagram of a path information database included in the central control server according to the first embodiment of this invention;
FIG. 6 is an explanatory diagram of a label setting information according to the first embodiment of this invention;
FIG. 7 is an explanatory diagram of an OAM processing execution table included in the central control server according to the first embodiment of this invention;
FIG. 8 is an explanatory diagram of an OAM processing database included in the central control server according to the first embodiment of this invention;
FIG. 9 is a flowchart of OAM processing in the transport system according to the first embodiment of this invention;
FIG. 10 is an explanatory diagram of loopback points according to the first embodiment of this invention;
FIG. 11 is a sequence diagram of processing prescribed by a first profile according to the first embodiment of this invention;
FIG. 12 is a sequence diagram of the processing prescribed by the first profile by the central control server according to the first embodiment of this invention;
FIG. 13 is a sequence diagram of processing prescribed by a second profile according to the first embodiment of this invention;
FIG. 14 is a flowchart of the processing prescribed by the second profile by the central control server according to the first embodiment of this invention;
FIG. 15 is a sequence diagram of processing prescribed by a third profile according to the first embodiment of this invention;
FIG. 16 is a flowchart of the processing prescribed by the third profile by the central control server according to the first embodiment of this invention;
FIG. 17 is an explanatory diagram of the configuration of a transport system according to a second embodiment of this invention;
FIG. 18 is a flowchart of processing prescribed by a second profile by a central control server according to the second embodiment of this invention; and
FIG. 19 is a flowchart of the processing prescribed by a third profile by a central control server according to a third embodiment of this invention.

### DETAILED DESCRIPTION OF THE PREFERRED EMBODIMENTS

### (First embodiment)

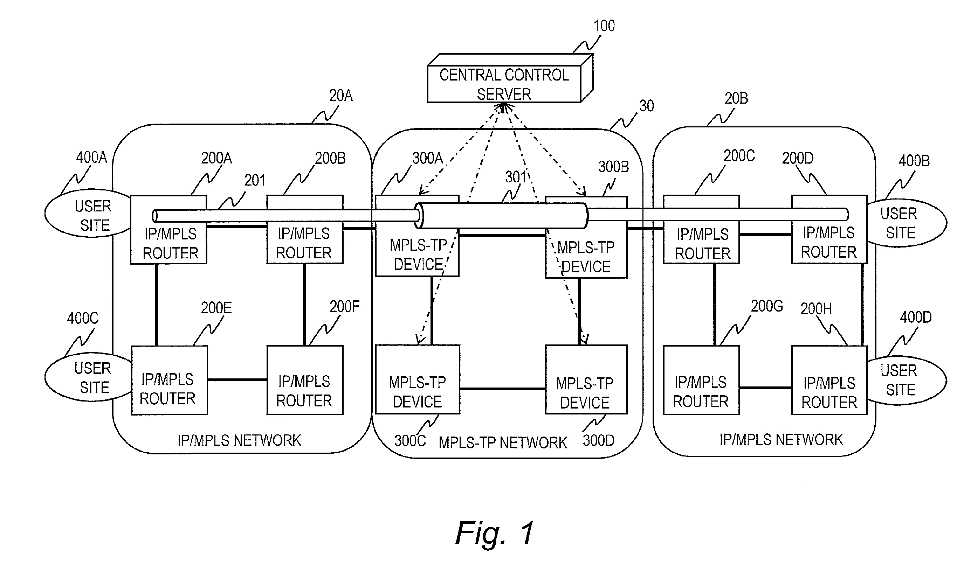

Referring to FIGS. 1 to 16, a description is now given of a first embodiment of this invention.

FIG. 1 is an explanatory diagram of a configuration of a transport system according to the first embodiment of this invention.

An IP/MPLS network 20A includes IP/MPLS routers (communication devices) 200A, 200B, 200E, and 200F. An IP/MPLS network 20B includes IP/MPLS routers 200C, 200D, 200G, and 200H. The IP/MPLS networks 20A and 20B are generally referred to as IP/MPLS networks 20. Moreover, the IP/MPLS routers 200A to 200H are generally referred to as IP/MPLS routers 200.

An MPLS-TP network (transport network) 30 includes MPLS-TP devices (transport devices) 300A to 300D (hereinafter generally referred to as MPLS-TP devices 300). The MPLS-TP network 30 is a core network for the IP/MPLS networks 20. Moreover, the MPLS-TP devices 300A to 300D constituting the MPLS-TP network 30 are coupled to a central control server (central control computer) 100 for managing and controlling the MPLS-TP devices 300A to 300D.

The central control server 100 maps, depending on a destination of a packet, a path (first communication path) of the IP/MPLS network 20 and a path (second communication path) of the MPLS-TP network 30 to each other, and sets a mapping result to the MPLS-TP devices 300. As a result, data is transmitted/received between user sites 400A to 400D (hereinafter generally referred to as user sites 400). The user site 400A or 400C coupled to the IP/MPLS network 20A transmits/receives data to/from the user site 400B or 400D coupled to the other IP/MPLS network 20B via the MPLS-TP network 30.

For example, when data is communicated between the user site 400A and the user site 400B, the central control server 100 maps a path 301 of the MPLS-TP network 30 to a path 201 of the IP/MPLS network 20, and sets the correspondence between the path 201 and the path 301 to the MPLS-TP devices 300A and 300B constituting the path 301.

It should be noted that, according to this embodiment, a case is exemplified where the IP/MPLS network 20 is used as a network in which a path is constructed by distributed control, and the MPLS-TP network 30 is used as a network in which a path is constructed by central control. However, as long as those networks respectively have paths constructed by the distributed control and the central control, those networks are not limited to the IP/MPLS network 20 and the MPLS-TP network 30.

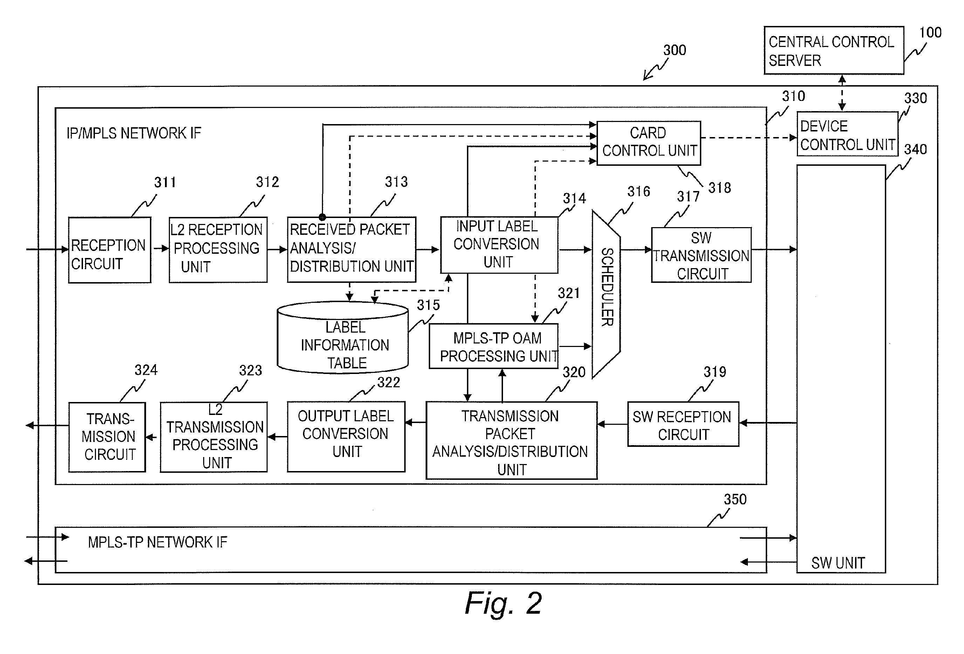

FIG. 2 is an explanatory diagram of a configuration of the MPLS-TP device 300 according to the first embodiment of this invention.

The MPLS-TP device 300 includes at least one IP/MPLS network IF (interface) 310, at least one device control unit 330, a SW (switch) unit 340, and at least one MPLS-TP network IF (interface) 350. Solid arrows illustrated in FIG. 2 represent flows of main signals, and broken arrows illustrated in FIG. 2 represent flows of control signals.

The device control unit 330 is coupled to the central control server 100, and sets setting information received from the central control server 100 to the switch unit 340, the IP/MPLS network IF 310, and the MPLS-TP network IF 350. Moreover, the device control unit 330 transmits/receives to/from the central control server 100 a packet to which a router alert label is added, and a control packet of a routing protocol, a control packet of the label distribution protocol, and the like of the IP/MPLS network 20.

The switch unit 340 analyzes a packet received by the IP/MPLS network IF 310 or the MPLS-TP network IF 350, thereby identifying a transfer destination of the received packet. Then, the switch unit 340 transmits, based on the identified transmission destination, the received packet to the IP/MPLS network IF 310 or the MPLS-TP network IF 350, which is appropriate.

The MPLS-TP network IF 350 is an interface coupled to other MPLS-TP devices 300 constituting the MPLS-TP network 30, and includes, for example, a transmission/reception circuit to/from the SW unit 340 and the MPLS-TP network 30, and a card control unit for communicating data to/from the device control unit 330.

The IP/MPLS network IF 310 includes a card control unit 318, a reception circuit 311, an L2 reception processing unit 312, a received packet analysis/distribution unit 313, an input label conversion unit 314, a label information table 315, a scheduler 316, a SW transmission circuit 317, a SW reception circuit 319, a transmission packet analysis/distribution unit 320, an MPLS-TP OAM processing unit 321, an output label conversion unit 322, an L2 transmission processing unit 323, and a transmission circuit 324.

The card control unit 318 is coupled to the device control unit 330, and has a function of setting setting information input from the device control unit 330 to respective components of the IP/MPLS network IF 310, and a function of reading out the information set to respective components, and outputting the read information to the device control unit 330. Moreover, the card control unit 318 has a function of transmitting/receiving to/from the central control server 330 a packet to which a router alert label is added, and a control packet of the routing protocol and a control packet of the label distribution protocol of the IP/MPLS network 20.

The reception circuit 311 receives data from the coupled IP/MPLS router 200.

The L2 reception processing unit 312 terminates a protocol on the data link layer of the open systems interconnection (OSI) reference model coupling between the IP/MPLS router 200 and the MPLS-TP device 300 to each other. For example, when the protocol on the data link layer is the Ethernet, the L2 reception processing unit 312 executes termination processing for an Ethernet frame. Moreover, the L2 reception processing unit 312 learns a transmission source MAC address of a received Ethernet frame, and shares the learned MAC address with the L2 transmission processing unit 323.

The received packet analysis/distribution module 313 analyzes a packet input from the L2 reception processing unit 312, and when the input packet is a data packet as a result of the analysis, outputs the data packet to the input label conversion module 314. Moreover, when the input packet is a packet containing a router alert label, the received packet analysis/distribution module 313 outputs the packet including the router alert label to the card control module 318. Moreover, when the input packet is a control packet of the routing protocol or a control packet of the label distribution protocol of the IP/MPLS network 20, the received packet analysis/distribution module 313 outputs the control packet of the routing protocol or the control packet of the label distribution protocol to the card control module 318.

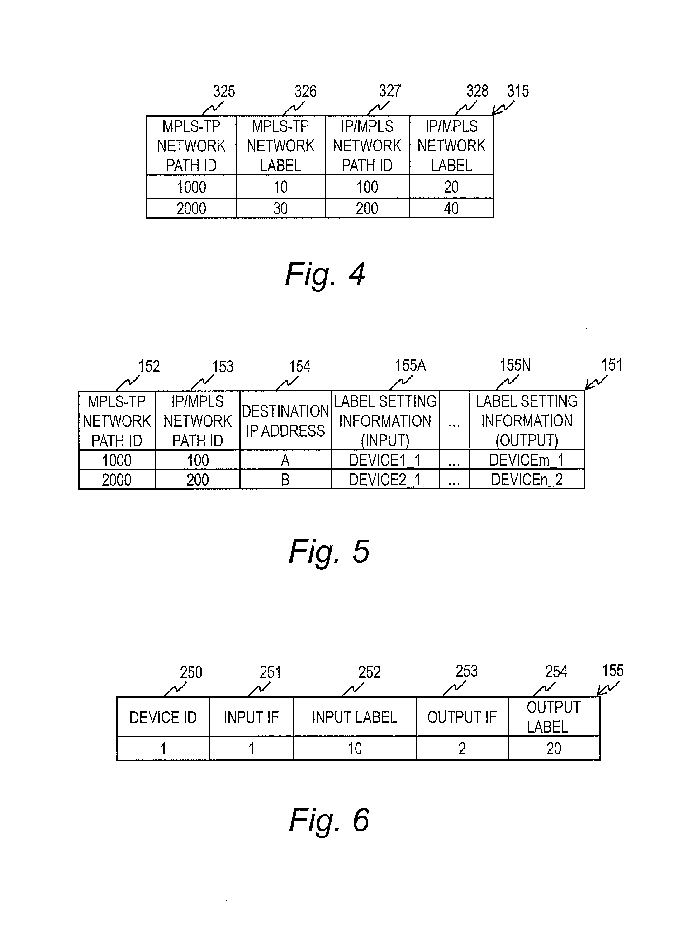

The label information table 315 is a table associating identification information on a path in the MPLS-TP network 30 and a label of the MPLS-TP network 30 with identification information on a path in the IP/MPLS network 20 and a label of the IP/MPLS network 20. The label information table 315 is described in detail later with reference to FIG. 4.

The input label conversion module 314 refers to the label information table 315, converts a label contained in a shim header at the beginning added to the packet into a label corresponding to the label, and outputs the packet after conversion to the scheduler 316. It should be noted that the MPLS-TP network IF 350 may be provided with the input label conversion module 314.

The scheduler 316 arbitrates outputs of the MPLS packet input from the input label conversion module 314 and the MPLS-TP OAM processing unit 321, and outputs the input MPLS packet to the SW transmission circuit 317.

The SW transmission circuit 317 outputs the MPLS packet input from the scheduler 316 to the SW unit 340.

The MPLS-TP OAM processing unit 321 executes OAM processing in the MPLS-TP network 30.

The SW reception circuit 319 receives a packet from the switch unit 340, and transfers the packet to the transmission packet analysis/distribution unit 320.

The transmission packet analysis/distribution unit 320 analyzes the received MPLS packet, and classifies the received MPLS packet into a data packet, a bandwidth reservation control packet, and an MPLS-TP OAM packet. The transmission packet analysis/distribution module 320 outputs a data packet and a bandwidth reservation control packet to the output label conversion unit 322, and outputs an MPLS-TP OAM packet to the MPLS-TP OAM processing unit 321. Moreover, the transmission packet analysis/distribution unit 320 outputs to the output label conversion unit 322 a packet for the LSP-ping, a control packet of the routing protocol, and a control packet of the label distribution protocol received from the central control server 100.

The output label conversion unit 322 refers to the label information table 315, converts a label contained in the shim header at the beginning added to the packet into a label corresponding to the label, and outputs the packet after conversion to the L2 transmission processing unit 323. It should be noted that the MPLS-TP network IF 350 may be provided with the output label conversion unit 322.

When the L2 transmission processing unit 323 receives the packet, the L2 transmission processing unit 323 generates a MAC header from a MAC address shared with the L2 reception processing unit 312, adds the generated MAC header to the received packet, and outputs the packet, to which the MAC header is added, to the transmission circuit 324.

The transmission circuit 324 outputs the packet input from the L2 transmission processing unit 323 to the IP/MPLS router 200.

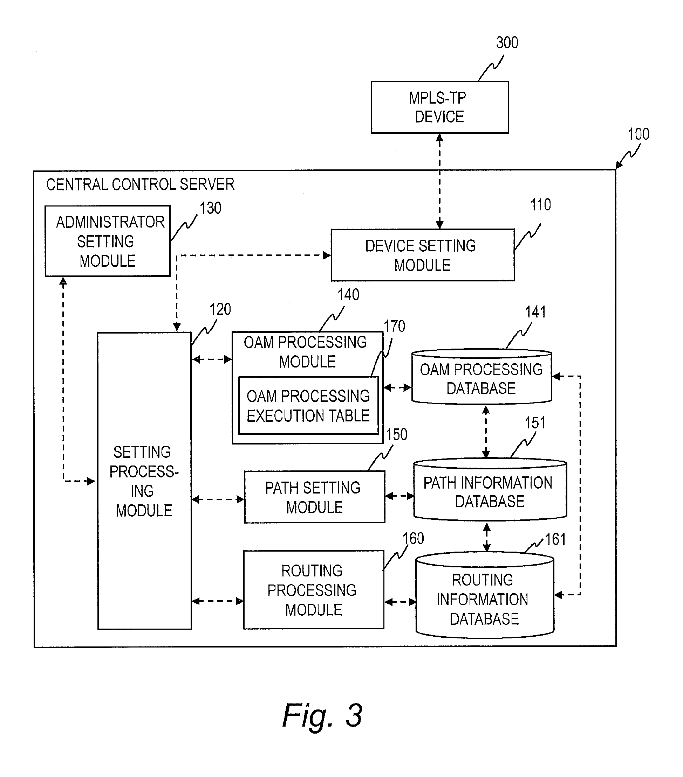

FIG. 3 is an explanatory diagram of a configuration of the central control server 100 according to the first embodiment of this invention.

The central control server 100 includes a device setting module 110, a setting processing module 120, an administrator setting module 130, an OAM processing module 140, an OAM processing database 141, a path setting module 150, a path information database 151, a routing processing module 160, and a routing information database 161. The central control server 100 includes a CPU (not shown), a memory (not shown), and an external storage device (not shown). The device setting module 110, the setting processing module 120, the administrator setting module 130, the OAM processing module 140, the path setting module 150, and the routing processing module 160 are realized by the CPU executing programs corresponding to the respective modules stored in the memory. The OAM processing database 141, the path information database 151, and the routing information database 161 are stored in the memory.

The device setting module 110 is coupled to the MPLS-TP device 300, and transmits information (such as device setting information, an instruction to execute the OAM processing, a control packet of the routing protocol in the MPLS-TP network 30, and a control packet of the label distribution protocol of the MPLS-TP network 30) from the setting processing module 120 to the MPLS-TP device 300. Moreover, the device setting module 110 receives a packet to which a router alert label is added, an OAM processing notification, a control packet of the label distribution protocol of the IP/MPLS network 20, a control packet of the routing protocol of the IP/MPLS network 20, and the like, which are transmitted from the MPLS-TP device 300.

The administrator setting module 130 receives from the outside information for the administrator to set the central control server 100, or information for the administrator to set the MPLS-TP device 300 via the central control server 100, and outputs these pieces of information to the setting processing module 120.

The setting processing module 120 transmits device setting information, an instruction to execute the OAM, a control packet of the routing protocol of the MPLS-TP network 30, and a control packet of the label distribution protocol of the MPLS-TP network 30 to the device setting module 110. Moreover, the setting processing module 120 determines the type of a control packet input from the device setting module 110, and transmits, based on a determination result, the input control packet to the OAM processing module 140, the path setting module 150, or the routing processing module 160.

The path setting module 150 executes the processing of the label distribution protocol of the IP/MPLS network 20. Moreover, the path setting module 150 refers to the routing information database 161, maps a path in the IP/MPLS network 20 constructed by the label distribution protocol of the IP/MPLS network 20 and a path in the MPLS-TP network 30 generated by the administrator to each other depending on a destination of a data packet, and registers the correspondence between the path in the IP/MPLS network 20 and the path in the MPLS-TP network 30 mapped to each other to the path information database 151. The path information database 151 is described in detail later with reference to FIG. 5.

Further, the path setting module 150 refers to the path information database 151, and transmits an instruction to register, to the label information table 315 of the MPLS-TP device 300 on a path in the MPLS-TP network 30 associated with a path in the IP/MPLS network 20, the correspondence between a label of the path in the IP/MPLS network 20 and a label of the path in the MPLS-TP network 30 mapped to each other, to the MPLS-TP device 300.

The routing processing module 160 processes a control packet of the routing protocol of the IP/MPLS network 20, and transmits the control packet to the IP/MPLS router 200. As the routing protocol of the IP/MPLS network 20, the open shortest path first (OSPF), the routing information protocol (RIP), and the like are used. The routing processing module 160 builds a routing table on the routing information database 161 by processing a control packet of the routing protocol of the IP/MPLS network 20.

When the OAM processing module 140 receives a request packet of the LSP-ping transmitted from the MPLS/IP router 200 from the setting processing module 120, the OAM processing module 140 adds an index to the received request packet. It should be noted that the index is different from those of other request packets, and is unique in the OAM processing module 140.

Then, the OAM processing module 140 refers to the OAM processing database 141, generates a profile prescribing a processing method corresponding the received request packet, and executes the processing corresponding to the request packet based on the generated profile. Specifically, the OAM processing module 140 transmits to IP/MPLS router 200 coupled to the MPLS-TP network 30 an instruction to execute the loopback processing, which is coupling check processing in the MPLS-TP network 30, an instruction to transmit the request packet of the LSP-ping, or an instruction to transmit a reply packet of the LSP-ping, via the device setting module 110 and the MPLS-TP device 300.

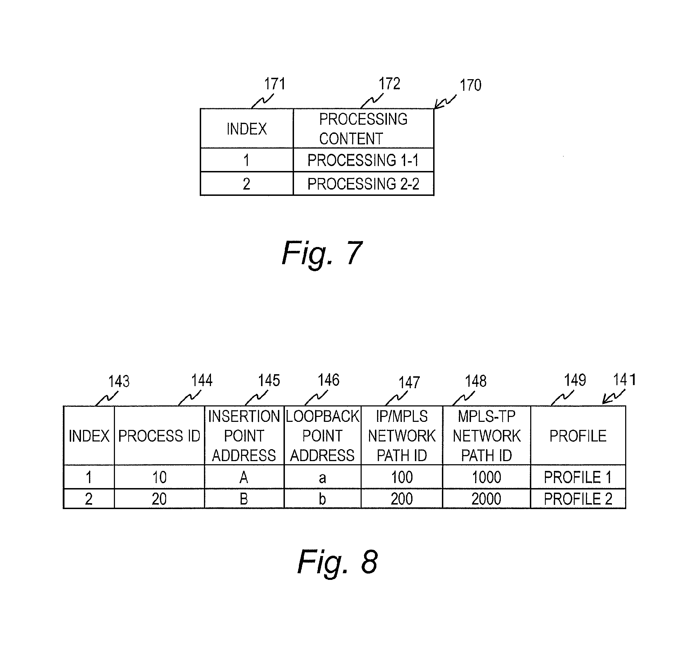

Moreover, the OAM processing module 140 includes an OAM processing execution table 170 for holding processing corresponding to a request packet under execution. The OAM processing execution table 170 is described in detail later with reference to FIG. 7. Moreover, the OAM processing database 141 is described in detail later with reference to FIG. 8.

FIG. 4 is an explanatory diagram of the label information table 315 held by the MPLS-TP device 300 according to the first embodiment of this invention.

When the MPLS-TP device 300 receives an instruction to register the label information table 315 from the central control server 100, a new entry is added to the label information table 315.

The label information table 315 includes MPLS-TP network path IDs 325, MPLS-TP network labels 326, IP/MPLS network path IDs 327, and IP/MPLS network labels 328.

To the MPLS-TP network path ID 325, identification information on a path of the MPLS-TP network 30 is registered. To the MPLS-TP network label 326, a label of the path of the MPLS-TP network 30 identified by the identification information registered to the MPLS-TP network path ID 325 is registered.

To the IP/MPLS network path ID 327, identification information on a path of the IP/MPLS network 20 associated with the path of the MPLS-TP network 30 identified by the identification information registered to the MPLS-TP network path ID 325 is registered. To the MPLS-TP network label 328, a label of the path of the MPLS-TP network 20 identified by the identification information registered to the MPLS-TP network path ID 327 is registered.

FIG. 5 is an explanatory diagram of the path information database 151 included in the central control server 100 according to the first embodiment of this invention.

The path information database 151 includes MPLS-TP network path IDs 152, IP/MPLS network path IDs 153, destination IP addresses 154, and pieces of label setting information 155A to 155N.

To the MPLS-TP network path ID 152, identification information on a path of the MPLS-TP network 30 is registered. To the IP/MPLS network path ID 153, identification information on a path of the IP/MPLS network 20 associated with the path of the MPLS-TP network 30 identified by the identification information registered to the MPLS-TP network path ID 152 is registered.

To the destination IP address 154, an IP address of an IP/MPLS router 200 which is a destination of the path of the IP/MPLS network 20 identified by the identification information registered to the IP/MPLS network path ID 153 is registered.

To the pieces of label setting information 155A to 155N, pieces of label setting information 155 on respective MPLS-TP devices 300 from an MPLS-TP device 300 as a start point to an MPLS-TP device 300 as an end point of the path of the MPLS-TP network 30 identified by the identification information registered to the MPLS-TP network path ID 152 are registered. When the path of the MPLS-TP network 30 is constructed via N MPLS-TP devices 300, the number of pieces of the label setting information 155 is N. A path of the MPLS-TP network 30 is constructed by at least the MPLS-TP device 300 as the start point to which a packet is input from the IP/MPLS network 20 and the MPLS-TP device 300 as an end point from which the packet is output to the IP/MPLS network 20, and thus the label setting information 155 includes at least the label setting information 155 on the MPLS-TP device 300 as the start point and the label setting information 155 on the MPLS-TP device 300 as the end point. The label setting information 155 is described in detail below with reference to FIG. 6.

FIG. 6 is an explanatory diagram of the label setting information 155 according to the first embodiment of this invention.

The label setting information 155 includes device IDs 250, input IFs 251, input labels 252, output IFs 253, and output labels 254.

To the device ID 250, identification information on an MPLS-TP device 300 is registered. To the input IF 251, identification information on an interface to which a packet is input is registered. To the input label 252, a label which is added to the input packet is registered. To the output IF 253, identification information on an interface from which the packet is output is registered. To the output label 254, a label which is added to the output packet is registered.

When a packet to which the label registered to the input label 252 is added is input to an interface identified by the identification information registered to the input IF 251, the MPLS-TP device 300 converts a label of the packet to a label registered to the output label 254, and outputs the packet from an interface identified by the identification information registered to the output IF 253.

FIG. 7 is an explanatory diagram of the OAM processing execution table 170 included in the central control server 100 according to the first embodiment of this invention.

The OAM processing execution table 170 includes indices 171 and processing contents 172.

To the index 171, an index added by the OAM processing module 140 to a request packet of the LSP-ping is registered. To the processing content 172, information representing a processing content under execution is registered.

FIG. 8 is an explanatory diagram of the OAM processing database 141 included in the central control server 100 according to the first embodiment of this invention.

The OAM processing database 141 includes indices 143, process IDs 144, insertion point addresses 145, loopback point addresses 146, IP/MPLS network path IDs 147, MPLS-TP network path IDs 148, and profiles 149.

To the index 143, an index added by the OAM processing module 140 to a request packet of the LSP-ping is registered. To the process ID 144, a process ID contained in the request packet of the LSP-ping is registered. To the insertion point address 145, an address of an IP/MPLS router 200 which has transmitted the request packet of the LSP-ping is registered. To the loopback point address 146, an address as a loopback point contained in the request packet of the LSP-ping is registered.

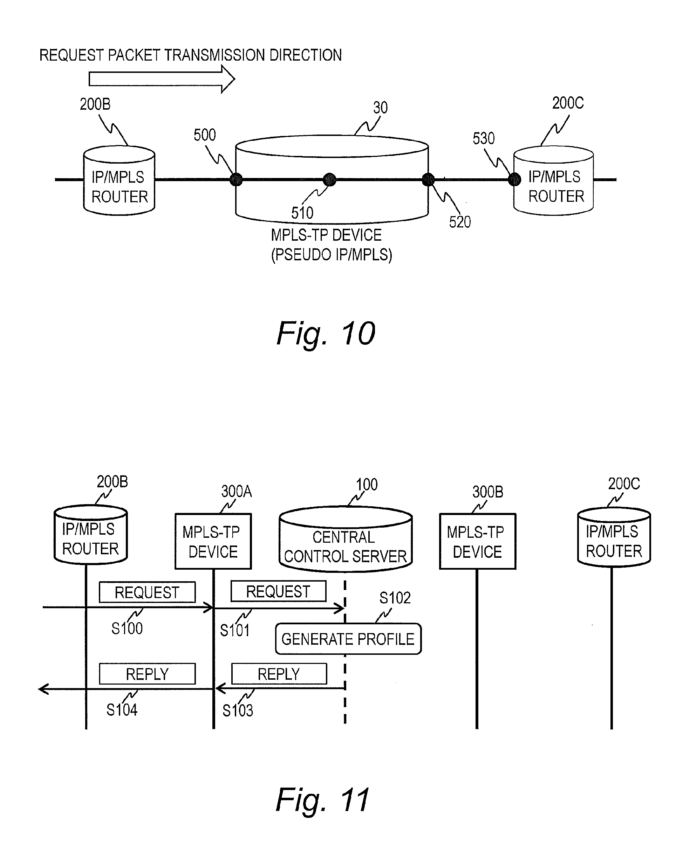

To the IP/MPLS network path ID 147, identification information on a path of the IP-MPLS network 20 subject to the coupling check is registered. To the MPLS-TP network path ID 148, identification information on a path of the MPLS-TP network 30 associated with the path of the IP/MPLS network 20 subject to the coupling check is registered. To the profile 149, a profile prescribing a processing method corresponding to the request packet of the LSP-ping is registered. The profile is generated by the OAM processing module 140, and a generation method for the profile is described in detail later with reference to FIGS. 10 to 16.

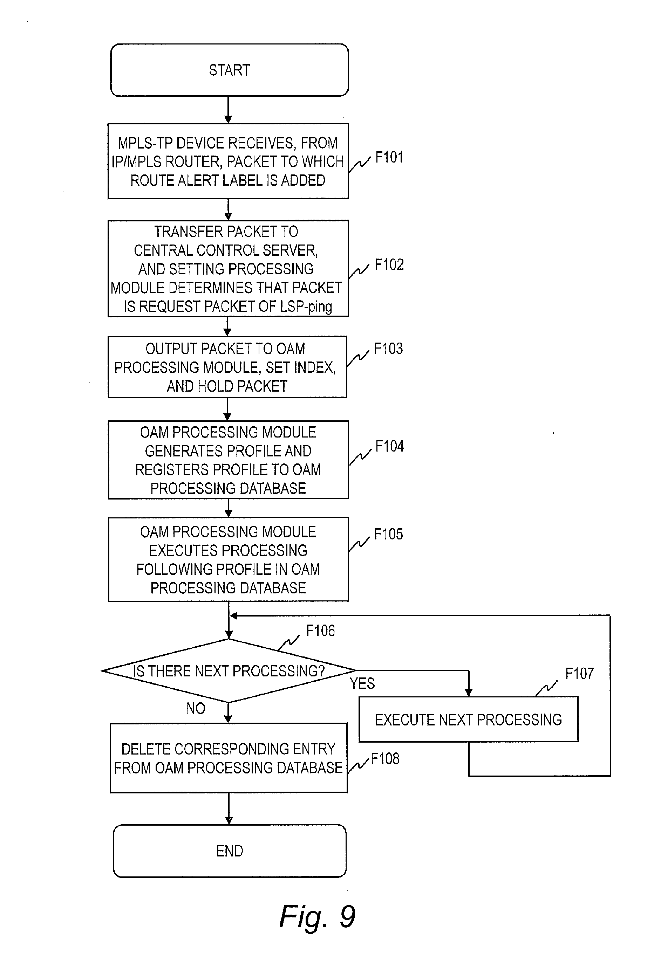

FIG. 9 is a flowchart of the OAM processing in the transport system according to the first embodiment of this invention.

In an operation example of the OAM processing illustrated in FIG. 9, a description is given of the case where, as illustrated in FIG. 1, in order to check the coupling between the IP/MPLS router 200B and the IP/MPLS router 200C, for the path 201 of the IP/MPLS network 20 mapped to the path 301 of the MPLS-TP network 30 coupling the MPLS-TP device 300A and the MPLS-TP device 300B to each other, the IP/MPLS router 200B transmits a request packet of the LSP-ping while the IP/MPLS router 200C side is set to a terminal point.

First, the received packet analysis/distribution module 313 of the MPLS-TP device 300A detects a packet to which a router alert label is added. Then, the received packet analysis/distribution module 313 transmits the packet to the central control server 100, and the setting processing module 120 of the central control server 100 receives the packet (F101).

When the setting processing module 120 of the central control server 100 receives the packet to which the router alert label is added, the setting processing module 120 refers to a transmission destination port number of the User Datagram Protocol (UDP), which is the protocol of the transport layer of the received packet, and when "3503", which represents the LSP-ping, is added to the transport destination port number, the setting processing module 120 determines that the received packet is a request packet of the LSP-ping (F102).

Then, the setting processing module 120 outputs the packet which is determined to be a request packet of the LSP-ping to the OAM processing module 140. The OAM processing module 140 sets an index to the input request packet in order to distinguish between processing for the input packet (request packet) and processing for other request packets of the LSP-ping, and holds the input request packet (F103). It should be noted that the held request packet is referred to when a reply packet is transmitted.

Then, the OAM processing module 140 generates a profile prescribing a processing method for the input request packet based on an address as the loopback point contained in the input request packet, and updates the OAM processing database 141 (F104). The generation method for the profile is described in detail later with reference to FIGS. 10 to 16.

An update method for the OAM processing database 141 is now described specifically. The OAM processing module 140 refers to the path information database 151, thereby identifying the path of the MPLS-TP network 30 associated with the path of the IP/MPLS network 20 subject to the check contained in the input request packet. Then, the OAM processing module 140 generates a new entry in the OAM processing database 141, registers the index set by the processing in F103 to the index 143, and registers a process ID contained in the request packet to the process ID 144. Moreover, the OAM processing module 140 registers an insertion point address contained in the input request packet to the insertion point address 145, and an address as the loopback point contained in the input request packet to the loopback point address 146. Moreover, the OAM processing module 140 registers identification information on the path of the IP/MPLS network 20 subject to the check contained in the input request packet to the IP/MPLS network path ID 147, and registers identification information on the path of the MPLS-TP network 30 associated with the path of the IP/MPLS network 20 subject to the check to the MPLS-TP network path ID 148. Moreover, the OAM processing module 140 registers the profile generated based on the address as the loopback point to the profile 149.

Then, the OAM processing module 140 refers to the OAM processing database 141, and searches for a profile of an entry matching the index set to the request packet by the processing in F103. Then, the OAM processing module 140 registers a processing content of first processing (processing 1) of the retrieved profile to the processing content 172 of the entry matching the index set by the processing in F103 in the OAM processing execution table 170, and executes the processing (F105). Then, when the execution of the first processing is completed, the OAM processing module 140 refers to the profile, and determines whether or not next processing exists (F106).

When it is determined by the processing in F106 that next processing exists, the OAM processing module 140 registers a processing content of the next processing to the processing content 172 of the entry matching the index set by the processing in F103 in the OAM processing execution table 170 (F107), and executes the next processing (F107), and the flow proceeds to the processing in F106.

When it is determined in the processing in F106 that next processing does not exist, in other words, all pieces of processing of the profile generated by the processing in F104 have been completed, the OAM processing module 140 deletes the entries matching the index set by the processing in F103 from the OAM processing execution table 170 and the OAM processing database 141 (F108), and ends the processing.

The generation method for the profile is now described with reference to FIGS. 10 to 16.

FIG. 10 is an explanatory diagram of the loopback points according to the first embodiment of this invention.

The central control server 100 adds an IP address to the interface of an MPLS-TP device 300 coupled to the IP/MPLS network 20. Moreover, the central control server 100 sets a loopback interface which is a virtual interface in which, to the MPLS-TP device 300 coupled to the IP/MPLS network 30, the IP address representing the MPLS-TP device 300 itself is set. As a result, an IP/MPLS router recognizes the entire MPLS-TP network as a single IP/MPLS router in a pseudo manner.

According to this embodiment, the OAM processing module 140 identifies which of first to third positions described later the position of a loopback point specified by a request packet of the LSP-Ping is, and the OAM processing module 140 generates a first profile when the loopback point is at the first position, generates a second profile when the loopback point is at the second position, and generates a third profile when the loopback point is at the third position.

The case where the loopback point is the first position refers to a case where the address of a loopback point contained in the request packet is an address of an input interface 500 or a loopback interface 510. The input interface 500 is an interface of the MPLS-TP device 300A as a start point of the path of the MPLS-TP network 30 which is coupled to the IP/MPLS router 200B, and to which the IP address is assigned by the central control server 100. Moreover, the loopback interface 510 is a virtual interface (loopback interface) which is set by the central control server 100, and represents the MPLS-TP device 300A itself.

The case where the loopback point is the second position refers to a case where the address of a loopback point contained in the request packet is an address of an output interface 520. The output interface 520 is an interface of the MPLS-TP device 300B as an end point of the path of the MPLS-TP network 30 which is coupled to the IP/MPLS router 200C, and to which the IP address is assigned by the central control server 100.

The case where the loopback point is the third position refers to a case where the address of the loopback point contained in the request packet is an address of an interface 530 of the IP/MPLS router 200 on a subsequent stage of the MPLS-TP device 300B as the end point of the MPLS-TP network 30.

The MPLS-TP device 300A as the start point of the MPLS-TP network 30 is an MPLS-TP device 300 to which a request packet is input, and is thus referred to as input device, and the MPLS-TP device 300B as the end point of the MPLS-TP network 30 is an MPLS-TP device 300 from which a request packet is output, and is thus referred to as output device.

The OAM processing module 140 can identify which of the first to third positions the position of the loopback point of a received request packet corresponds to by referring to the loopback point address contained in the received request packet and the routing information database 161.

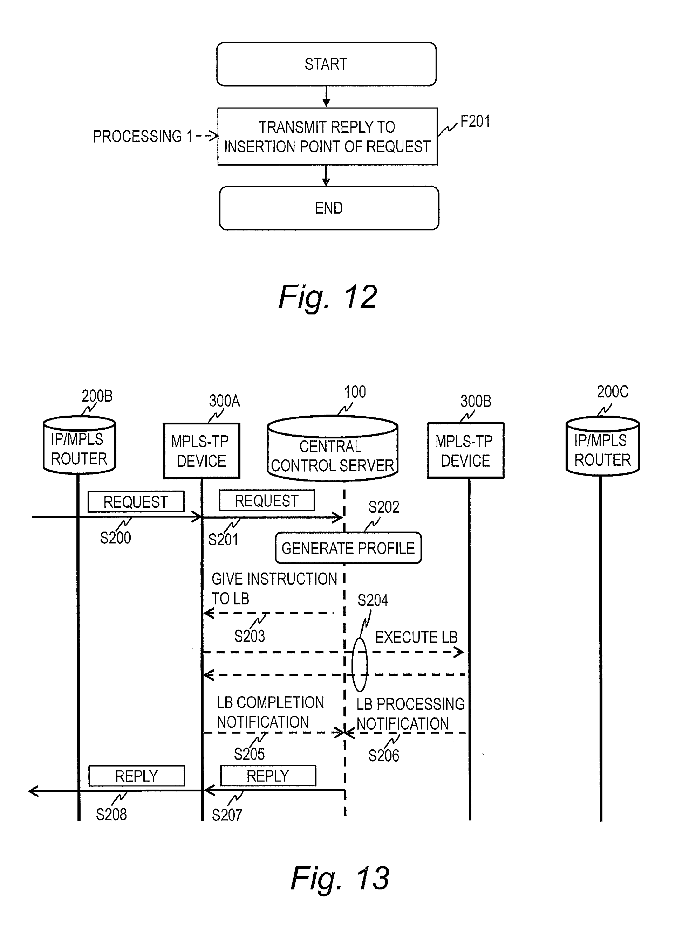

Referring to FIGS. 11 and 12, a description is now given of processing prescribed by the first profile generated when the loopback point is the first position.

FIG. 11 is a sequence diagram of the processing prescribed by the first profile according to the first embodiment of this invention. FIG. 12 is a sequence diagram of the processing prescribed by the first profile by the central control server 100 according to the first embodiment of this invention.

First, the MPLS-TP device 300A, which is the input device, receives a request packet of the LSP-ping from the IP/MPLS router 200B (S100). In this case, the MPLS-TP device 300A transmits the received request packet of the LSP-ping to the central control serer 100 (S101).

Then, when the central control server 100 receives the request packet, the central control server 100 determines that the position of the loopback point contained in the received request packet is the first position, and generates the first profile (S102).

In a case where the position of the loopback point is a first position, when the request packet reaches the MPLS-TP device 300A, coupling from the IP/MPLS router 200, which is an insertion point of the request packet, to the specified loopback point can be checked. Therefore, the processing prescribed by the first profile is processing of instructing the MPLS-TP device 300A to transmit a reply packet in response to the request packet.

The OAM processing module 140 of the central control server 100 transmits, in order to transmit the reply packet to the IP/MPLS router 200B, the reply packet to the MPLS-TP device 300A (S103, and F201 illustrated in FIG. 12). In this case, the OAM processing module 140 refers to the OAM processing database 141, and includes, into the reply packet to be transmitted, an IP address of the insertion point of the request packet registered to the insertion point address 145 and the identification information registered to the IP/MPLS network path ID 147. When the processing in F201 is executed, the OAM processing module 140 registers the processing 1 to the processing content 172 of an entry matching the index set to the request packet in the OAM processing execution table 170.

Then, the central control server 100 deletes, from the OAM processing execution table 170 and the OAM processing database 141, the entries matching the index set to the request packet.

When the MPLS-TP device 300A receives the reply packet, the MPLS-TP device 300A transmits the reply packet to the IP/MPLS router 200B (S104).

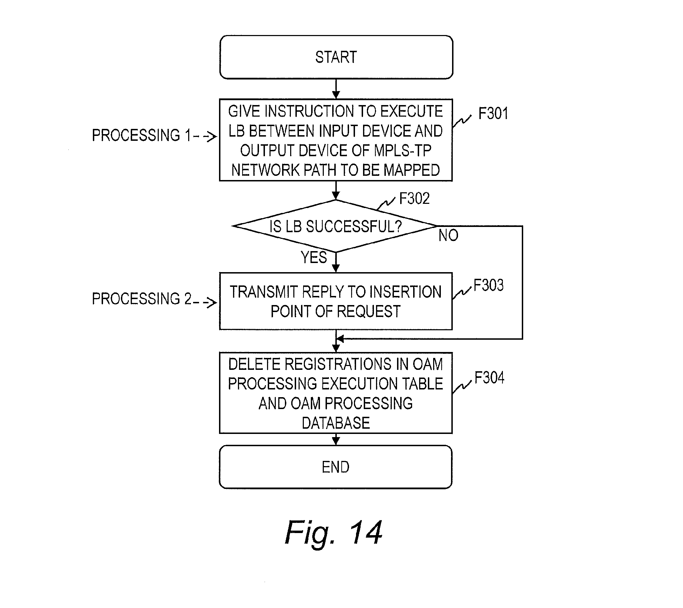

Referring to FIGS. 13 and 14, a description is now given of processing prescribed by the second profile generated when the loopback point is the second position.

FIG. 13 is a sequence diagram of the processing prescribed by the second profile according to the first embodiment of this invention.

Processing in S200 and S201 is the same as the processing in S100 and S101 illustrated in FIG. 11, and a description thereof is therefore omitted.

When the central control server 100 receives the request packet of the LSP-ping transmitted from the MPLS-TP device 300A by the processing in S201, the central control server 100 determines that the loopback point contained in the received request packet is the second position, and generates the second profile (S202).

In a case where the loopback point is a second position, it is necessary to check coupling from the MPLS-TP device 300A as the start point to the MPLS-TP device 300B as the end point of the path of the MPLS-TP network 300 subject to the coupling check. As a result, the OAM processing module 140 of the central control server 100 instructs, in order to check the coupling from the MPLS-TP device 300A as the start point to the MPLS-TP device 300B as the end point of the path of the MPLS-TP network 30 subject to the coupling check, the MPLS-TP device 300A to execute LP processing for checking coupling up to the MPLS-TP device 300B (S203).

When instructed to execute the LB processing, the MPLS-TP device 300A executes the LB processing between the MPLS-TP device 300A and the MPLS-TP device 300B (S204).

Specifically, the MPLS-TP device 300A transmits a request packet for the LB to the path of the MPLS-TP network 30. To the TTL of the shim header contained in the request packet for the LB, the number of hops from the MPLS-TP device 300A to the MPLS-TP device 300B as the loopback point of the request packet for the LB is registered.

When an MPLS-TP device 300 existing on the path from the MPLS-TP device 300A to the MPLS-TP device 300B receives the request packet for the LB, the MPLS-TP device 300 decrements the TTL of the shim header by one, and transmits the request packet for the received LB to an MPLS-TP device 300 as the next hop. When the MPLS-TP device 300B receives the request packet for the LB, "0" is registered to the TTL of the shim header of the request packet for the LB, and hence the MPLS-TP device 300B transmits a reply packet in response to the request packet for the LB to the MPLS-TP device 300A.

When the MPLS-TP device 300A receives the reply packet for the LB, the MPLS-TP device 300A transmits to the central control server 100 an LB completion notification representing that coupling of the path of the MPLS-TP network 30 subject to the coupling check is confirmed (S205).

Further, when the MPLS-TP device 300B transmits the reply packet for the LB, the MPLS-TP device 300B transmits to the central control server 100 an LB processing notification representing that coupling of the path of the MPLS-TP network 30 subject to the coupling check is confirmed (S206).

When the central control server 100 receives the LB completion notification transmitted by the processing in S205, the central control server 100 has confirmed the coupling of the path of the MPLS-TP network 30 subject to the coupling check, and thus, in order to transmit a reply packet for the LSP-ping to the IP/MPLS router 200B, transmits the reply packet for the LSP-ping to the MPLS-TP device 300A (S207). Then, the central control server 100 deletes, from the OAM processing execution table 170 and the OAM processing database 141, the entries matching the index set to the request packet.

When the MPLS-TP device 300A receives the reply packet transmitted by the central control server 100 by the processing in S207, the MPLS-TP device 300A transmits the received reply packet to the IP/MPLS router 200B (S208).

As a result, the coupling up to the MPLS-TP device 300B as the loopback point of the request packet transmitted from the IP/MPLS router 200B can be checked.

FIG. 14 is a flowchart of the processing prescribed by the second profile by the central control server 100 according to the first embodiment of this invention.

When the OAM processing module 140 of the central control server 100 generates the second profile, as described above in the processing in S203 of FIG. 13, the OAM processing module 140 instructs MPLS-TP device 300A to execute the LB processing for checking coupling from the MPLS-TP device 300A to the MPLS-TP device 300B (F301). When the processing in F301 is executed, the OAM processing module 140 registers the processing 1 to the processing content 172 of an entry matching the index set to the request packet in the OAM processing execution table 170.

Then, the OAM processing module 140 of the central control server 100 determines whether or not the LB processing has succeeded by determining whether or not an LB completion notification has been received from the MPLS-TP device 300A within a predetermined period after instructing the MPLS-TP device 300A to execute the LB processing (F302).

In the processing in F302, when it is determined that an LB completion notification is received from the MPLS-TP device 300A within the predetermined period after the MPLS-TP device 300A is instructed to execute the LB processing, as described above in the processing in S207 illustrated in FIG. 13, the OAM processing module 140 has confirmed the coupling of the path in the MPLS-TP network 30 subject to the coupling check, and hence, in order to transmit a reply packet to the IP/MPLS router 200B, the OAM processing module 140 transmits the reply packet to the MPLS-TP device 300A (F303). In this case, the OAM processing module 140 refers to the OAM processing database 141, and includes, into the reply packet to be transmitted, an IP address of the insertion point of the request packet registered to the insertion point address 145 and identification information registered to the IP/MPLS network path ID 147. When the processing in F303 is executed, the OAM processing module 140 registers processing 2 to the processing content 172 of an entry matching the index set to the request packet in the OAM processing execution table 170.

Then, the OAM processing module 140 deletes, from the OAM processing execution table 170 and the OAM processing database 141, the entries matching the index set to the request packet (F304), and ends the processing.

In the processing in F302, when the OMA processing module 140 determines that an LB completion notification has not been received until the predetermined period has elapsed after the MPLS-TP device 300A is instructed to execute the LB processing, the central control server 100 determines that the LB processing has failed, and the flow proceeds to the processing in F304. Then, the OMA processing module 140 deletes, from the OAM processing execution table 170 and the OAM processing database 141, the entries matching the index set to the request packet, and ends the processing.

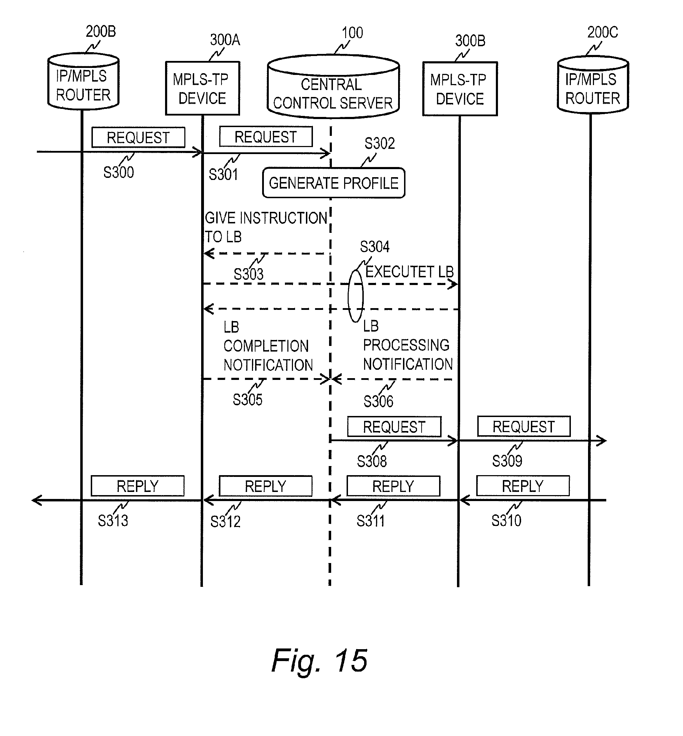

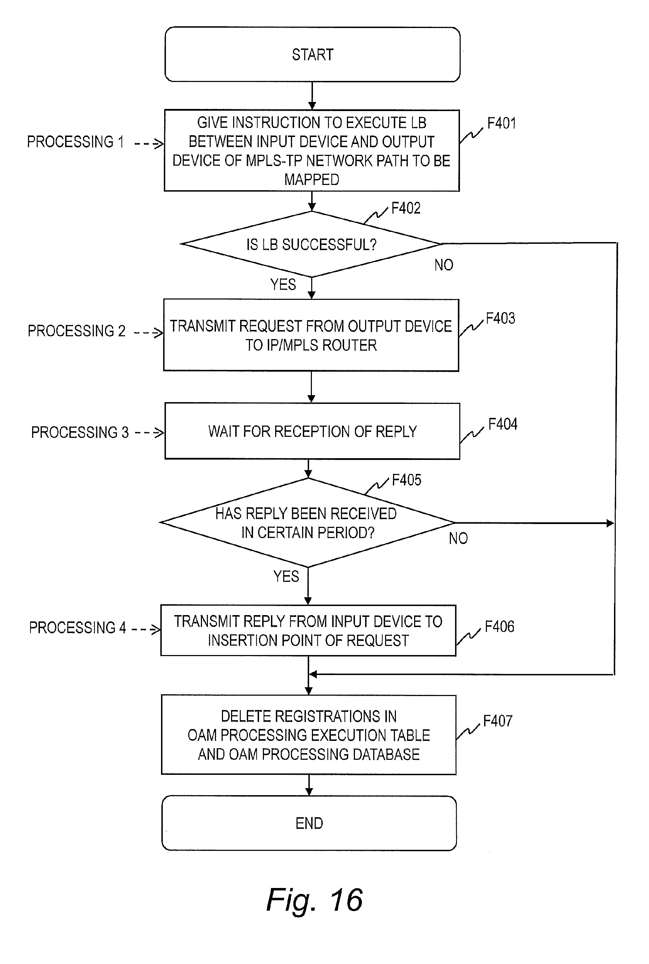

Referring to FIGS. 15 and 16, a description is now given of processing prescribed by the third profile generated when the loopback point is the third position.

FIG. 15 is a sequence diagram of the processing prescribed by the third profile according to the first embodiment of this invention.

Processing in S300 to S306 is the same as the processing in S200 to S206 illustrated in FIG. 13, and a description thereof is therefore omitted. It should be noted that, in the processing in S302, the central control server 100 determines that the position of the loopback point contained in the received request packet is the third position, and generates the third profile.

When the central control server 100 receives an LB completion notification transmitted by the processing in S305, in other words, the coupling of the path in the MPLS-TP network 30 subject to the coupling check is confirmed, the central control server 100 needs to check the coupling of a path in the IP/MPLS network 20 from the MPLS-TP device 300B as the end point of the path in the MPLS-TP network 30 to an IP/MPLS router as a loopback point on a subsequent stage of the MPLS-TP device 300B. Therefore, the central control server 100 transmits the request packet transmitted by the MPLS-TP device 300A to the MPLS-TP device 300B (S308).

When the MPLS-TP device 300B receives the request packet transmitted by the central control server 100 by the processing in S308, the MPLS-TP device 300B transmits the received request packet to the IP/MPLS router 200C (S309).

When the IP/MPLS router 200C receives a reply packet in response to the request packet, the IP/MPLS router 200C transmits the received reply packet to the MPLS-TP device 300B (S310).

When the MPLS-TP device 300B receives the reply packet transmitted by the IP/MPLS router 200C by the processing in S310, the MPLS-TP device 300B transmits the received reply packet to the central control server 100 (S311).

When the central control server 100 receives the reply packet transmitted by the MPLS-TP device 300B by the processing in S311, the central control server 100 transmits the received reply packet to the MPLS-TP device 300A coupled to the IP/MPLS router 200B at the insertion point of the request packet corresponding to the reply packet (S312).

When the MPLS-TP device 300A receives the reply packet transmitted by the central control server 100 by the processing in S312, the MPLS-TP device 300A transmits the received reply packet to the IP/MPLS router 200B (S313).

As described above, when the loopback point is the IP/MPLS router 200 on the subsequent stage of the MPLS-TP device 300B as the end point of the path in the MPLS-TP network 30, the central control server 100 transfers, after the confirmation of the path in the MPLS-TP network 30, the received request packet via the MPLS-TP device 300B to the IP/MPLS router 200 as the loopback point, and hence even when an IP/MPLS router 200 on the subsequent stage of the MPLS-TP network 30 is specified as the loopback point, the coupling to the loopback point can be checked.

FIG. 16 is a flowchart of the processing prescribed by the third profile by the central control server 100 according to the first embodiment of this invention.

Pieces of processing in F401, F402, and F407 are respectively the same as the pieces of processing in F301, F302, and F304 illustrated in FIG. 14, and a description thereof is therefore omitted.

In the processing in F402, when the OAM processing module 140 receives an LB completion notification within the predetermined period after instructing the MPLS-TP device 300A to execute the LB processing, as described above in the processing in S308 illustrated in FIG. 15, the OAM processing module 140 transmits, in order to transmit the request packet transmitted by the MPLS-TP device 300A to the IP/MPLS router 200C, the request packet to the MPLS-TP device 300B (F403). When the processing in F403 is executed, the OAM processing module 140 registers the processing 2 to the processing content 172 of an entry matching the index set to the request packet in the OAM processing execution table 170.

Then, the OAM processing module 140 suspends the processing for a predetermined period in order to receive a reply packet in response to the request packet transmitted by the processing in F403 (F404). When the processing in F404 is executed, the OAM processing module 140 registers processing 3 to the processing content 172 of an entry matching the index set to the request packet in the OAM processing execution table 170.

Then the OAM processing module 140 determines, in the processing in F404, whether or not a reply packet is received within the predetermined period (F405).

In the processing in F405, when the OAM processing module 140 determines that a reply packet has been received within the predetermined period in the processing in F404, the OAM processing module 140 transmits the received reply packet to the MPLS-TP device 300A (F406). In this case, the OAM processing module 140 refers to the OAM processing database 141, and includes, into the reply packet to be transmitted, an IP address of the insertion point of the request packet registered to the insertion point address 145 and identification information registered to the IP/MPLS network path ID 147. When the processing in F406 is executed, the OAM processing module 140 registers processing 4 to the processing content 172 of an entry matching the index set to the request packet in the OAM processing execution table 170.

Then, the flow proceeds to processing in F407, and the OAM processing module 140 deletes, from the OAM processing execution table 170 and the OAM processing database 141, the entries matching the index set to the request packet, and ends the processing.

On the other hand, in the processing in F405, when the OAM processing module 140 determines that a reply packet has not been received within the predetermined period in the processing in F404, the flow proceeds to the processing in F407, and the OAM processing module 140 deletes, from the OAM processing execution table 170 and the OAM processing database 141, the entries matching the index set to the request packet, and ends the processing.

As described above with reference to FIGS. 10 to 16, according to this embodiment, when the MPLS-TP device 300 receives a request packet from the IP/MPLS router 200, the MPLS-TP device 300 transmits the request packet to the central control server 100 which can process the protocol used in the IP/MPLS network 20, and the central control server 100 identifies a loopback point of the request packet, and executes the coupling check processing corresponding to the identified loopback point. As a result, a system which can identify the loopback point of the request packet, thereby checking an end-to-end coupling can be provided. Moreover, with the pseudo router method which sets, in the pseudo manner, the MPLS-TP network 30 as a single IP/MPLS router 200, even when the MPLS-TP network 30 is coupled as a core for the IP/MPLS networks 20, thereby providing the interwork, it is possible to specify the MPLS-TP network as a loopback point of the LSP-ping.

In FIGS. 13 to 16 according to this embodiment, when the central control server 100 receives an LB completion notification from the MPLS-TP device 300A, the central control server 100 confirms coupling of a path in the MPLS-TP network 30, but when the central control server 100 receives an LB processing notification from the MPLS-TP device 300B, the central control server 100 may confirm coupling of a path in the MPLS-TP network 30.

Moreover, according to this embodiment, the central control server 100 generates a profile depending on a loopback point, but profiles respectively depending on the loopback points may be set in advance, and when the central control server 100 identifies a loopback point, a profile corresponding to the loopback point may be selected.

### (Second embodiment)

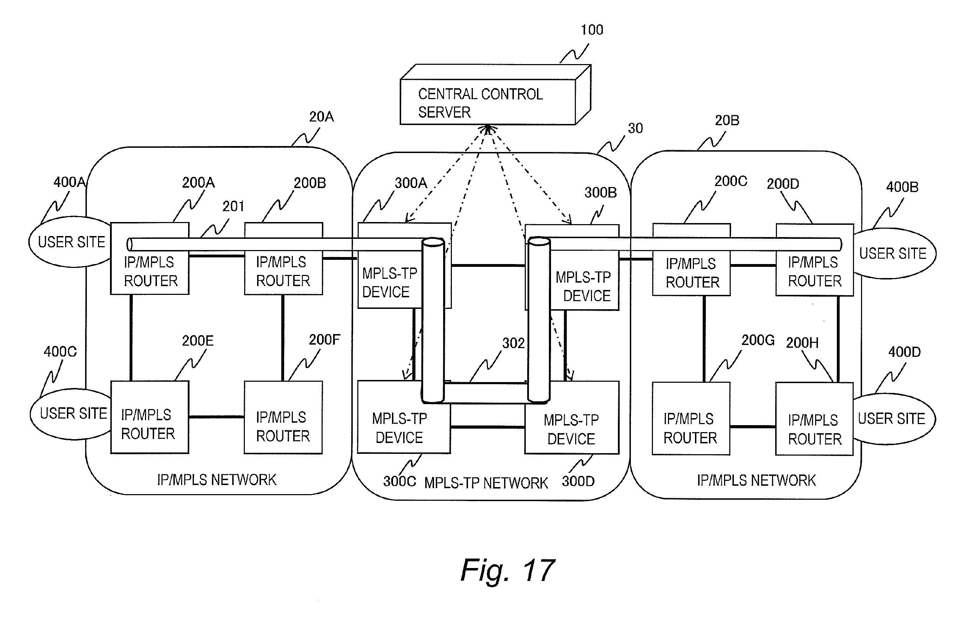

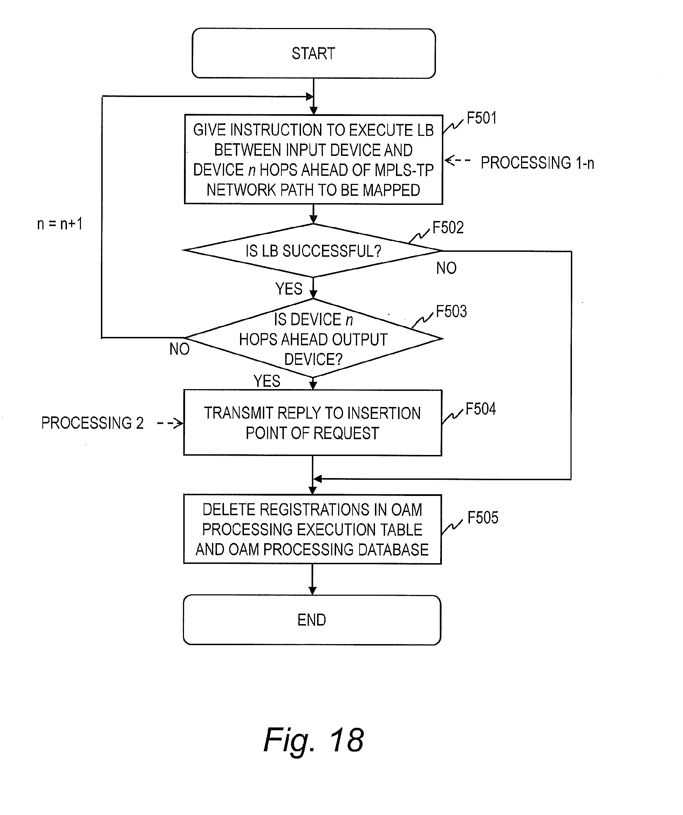

Referring to FIGS. 17 and 18, a description is now given of a second embodiment of this invention.

According to the first embodiment, the central control server 100 gives an instruction to execute the LB processing between the MPLS-TP device 300 as a start point of a path in the MPLS-TP network 30 subject to check and the MPLS-TP device 300 as an end point of the path. On the other hand, according to this embodiment, the central control server 100 executes the LB processing from the MPLS-TP device 300 as the start point to all MPLS-TP devices 300 existing on a path in the MPLS-TP network 30 subject to the coupling check. As a result, more reliable coupling check can be executed.

FIG. 17 is an explanatory diagram of a configuration of the transport system according to the second embodiment of this invention. The transport system illustrated FIG. 17 is the same in the configuration of the devices as the transport system illustrated in FIG. 1 according to the first embodiment, but the transport system illustrated in FIG. 17 is different from the transport system illustrated in FIG. 1 in MPLS-TP devices 300 through which the path in the MPLS-TP network 30 routes.

A path 302 in the MPLS-TP network 30 illustrated in FIG. 17 starts from the MPLS-TP device 300A as the start point, routes through the MPLS-TP devices 300C and 300D, and reaches the MPLS-TP device 300B as the end point.

The LB processing according to this embodiment is executed between the MPLS-TP devices 300A and 300C, between the MPLS-TP devices 300A and 300D, and between the MPLS-TP devices 300A and 300B.

FIG. 18 is a flowchart of the processing prescribed by the second profile by the central control server according to the second embodiment of this invention. Processing in F504 and F505 illustrated in FIG. 18 according to this embodiment is the same as the processing in F303 and F304 illustrated in FIG. 14 according to the first embodiment, and a description thereof is therefore omitted.

In the processing prescribed by the second profile according to this embodiment, the OAM processing module 140 executes processing in F501 to F503 in place of the processing in F301 and F302 illustrated in FIG. 14 according to the first embodiment.

First, the OAM processing module 140 instructs the MPLS-TP device 300A to execute the LB processing between the MPLS-TP device 300A and an MPLS-TP device 300 *n* hops ahead of the MPLS-TP device 300A (F501). When the processing in F501 is executed, the OAM processing module 140 registers processing 1-*n* to the processing content 172 of an entry matching the index set to the request packet in the OAM processing execution table 170. It should be noted that, when the processing in F501 is executed for the first time, *n* is set to 1.

Then, the OAM processing module 140 determines whether or not the LB processing has succeeded by determining whether or not an LB completion notification has been received within a predetermined period after instructing the MPLS-TP device 300A to execute the LB processing (F502).

In the processing in F502, when the OMA processing module 140 determines that an LB completion notification has not been received until the predetermined period has elapsed after the MPLS-TP device 300A is instructed to execute the LB processing, the central control server 100 determines that the LB processing has failed, and the flow proceeds to the processing in F505. Then, the OMA processing module 140 deletes, from the OAM processing execution table 170 and the OAM processing database 141, the entries matching the index set to the request packet, and ends the processing.

On the other hand, in the processing in F502, when the OMA processing module 140 determines that an LB completion notification has been received within the predetermined period after the MPLS-TP device 300A is instructed to execute the LB processing, the OAM processing module 140 determines whether or not the MPLS-TP device 300 n hops ahead of the MPLS-TP device 300A is the MPLS-TP device 300B as the end point of the path in the MPLS-TP network 30 subject to the coupling check (F503).

In the processing in F503, when the OAM processing module 140 determines that the MPLS-TP device 300 *n* hops ahead of the MPLS-TP device 300A is not the MPLS-TP device 300B as the end point of the path in the MPLS-TP network 30 subject to the coupling check, the LB processing has not been executed from the MPLS-TP device 300 as the start point to all the MPLS-TP devices 300 on the path, and the OAM processing module 140 thus sets to n a value obtained by adding 1 to n, and the flow returns to the processing in F501.

On the other hand, in the processing in F503, when the OAM processing module 140 determines that the MPLS-TP device 300 n hops ahead of the MPLS-TP device 300A is the MPLS-TP device 300B as the end point of the path in the MPLS-TP network 30 subject to the coupling check, the LB processing has been executed from the MPLS-TP device 300 as the start point to all the MPLS-TP devices 300 on the path, and hence the central control server 100 transmits, in order to transmit a reply packet to the IP/MPLS router 200B, the reply packet to the MPLS-TP device 300A (F504). When the processing in F504 is executed, the OAM processing module 140 registers the processing 2 to the processing content 172 of an entry matching the index set to the request packet in the OAM processing execution table 170.

Then, the flow proceeds to the processing in F505, and the OAM processing module 140 deletes, from the OAM processing execution table 170 and the OAM processing database 141, the entries matching the index set to the request packet, and ends the processing.

As described above, the LB processing is executed one hop at a time on the path in the MPLS-TP network 30, which results in an increase in reliability of the coupling check.

It should be noted that the LB processing illustrated in FIG. 18 can be applied to the processing prescribed by the third profile. In this case, in place of the processing in F401 and F402 illustrated in FIG. 16 according to the first embodiment, the processing in F501 to F503 illustrated in FIG. 18 only needs to be executed.

Moreover, the processing according to this embodiment is not only applied to the transport system illustrated in FIG. 17, but can also be applied to the transport system illustrated in FIG. 1.

### (Third embodiment)

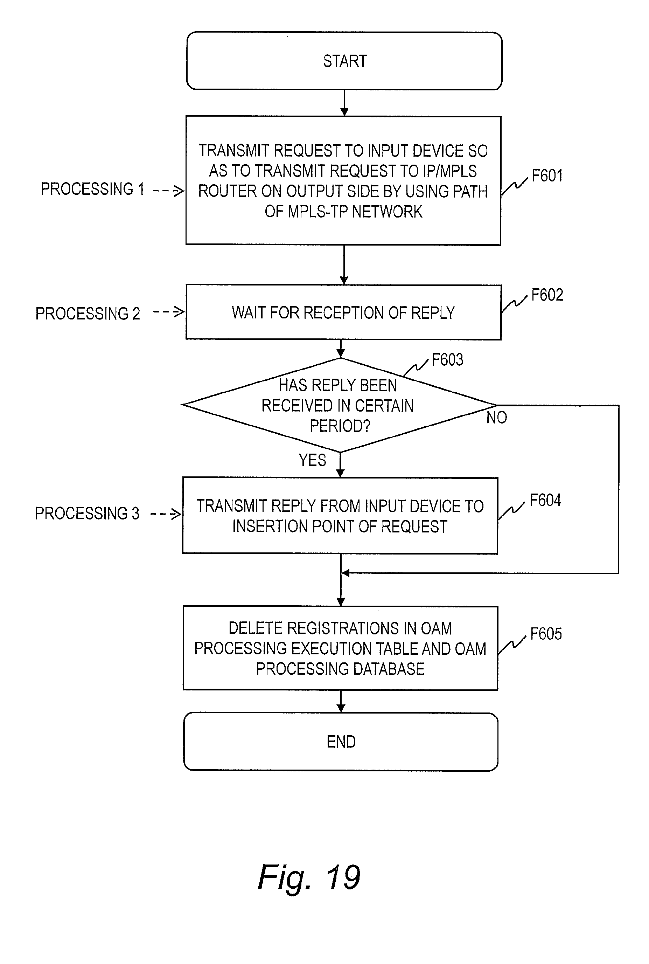

Referring to FIG. 19, a description is now given of a third embodiment of this invention.

According to this embodiment, in the processing prescribed by the third profile, the central control server 100 does not instruct the MPLS-TP device 300A to execute the LB processing, but transmits, by using a path in the MPLS-TP network 30 subject to the coupling check, a request packet to an IP/MPLS router 200 as a loopback point. It should be noted that a reply packet in response to the request packet enables to check coupling the path in the MPLS-TP network 30. As a result, the coupling can be checked while processing loads imposed on the central controls server 100 and the MPLS-TP device 300 are reduced.

FIG. 19 is a flowchart of the processing prescribed by the third profile by the central control server 100 according to the third embodiment of this invention.

Processing prescribed by the third profile illustrated in FIG. 19 according to this embodiment does not execute the processing in F401 and F402 illustrated in FIG. 16 according to the first embodiment, and executes processing in F601 in place of the processing in F403. Moreover, pieces of processing in F602 to F605 illustrated in FIG. 19 according to this embodiment are respectively the same as the pieces of processing in F404 to F407 illustrated in FIG. 16 according to the first embodiment.

A description is now given of the processing in F601.

The OAM processing module 140 refers to the path information database 151, thereby identifying a path in the MPLS-TP network 30 corresponding to a path in the IP/MPLS network 20 used to transmit the received request packet. Then, the OAM processing module 140 transmits the received request packet to the MPLS-TP device 300A as the start point of the identified path in the MPLS-TP network 30 so that the request packet is transferred in the MPLS-TP network 30 by using the identified path in the MPLS-TP network 30 (F601). Specifically, the OAM processing module 140 sets a label on a first stage of the request packet to a label corresponding to the path in the IP/MPLS network 20, sets a label on a second stage of the request packet to a label corresponding to the path in the MPLS-TP network 30, and transmits the request packet to the MPLS-TP device 300A.

When each of the MPLS-TP devices 300 receives a packet to which a router alert label is added such as a request packet, the MPLS-TP device 300 refers to the label on the second stage, transfers the packet to the MPLS-TP device 300B as the end point, and does not change the label on the first stage.

As described above, the request packet is transferred by using the path in the MPLS-TP network 30 subject to the coupling check, and hence when the central control server 100 receives a reply packet from the MPLS-TP device 300B within a predetermined period, the central control server 100 can check coupling between the ends without executing the LB processing, which saves the processing loads imposed on the central control server 100 and the MPLS-TP devices 300 when the LB processing is executed.

Moreover, according to the first to third embodiments, a description has been given of the example where the LSP-ping is used as the failure check function, but another function (such as VCCV) may be used as long as the function checks coupling by an insertion point transmitting a request packet indicating a loopback point and receiving a reply packet corresponding to the request packet. Moreover, a description has been given of the example where the loopback is used as the failure check function in the network in which a communication path is constructed by the central control, but another function may be used.

It should be noted that each of the above-mentioned embodiments is a preferred embodiment of this invention, and can be modified without departing from the gist of this invention.

While the present invention has been described in detail and pictorially in the accompanying drawings, the present invention is not limited to such detail but covers various obvious modifications and equivalent arrangements, which fall within the purview of the appended claims.

## Claims

1. A transport system, comprising:
a plurality of transport devices (300A - 300D) to be coupled to a first communication path which is established between a communication device (200A - 200H) as a start point and a communication device (200A - 200H) as an end point in an autonomous and decentralized manner by the communication devices (200A - 200H) using a control packet; and
a central control computer (100) for establishing a second communication path (302) in a transport network (30) including the plurality of transport devices (300A - 300D), between one of the plurality of transport devices (300A - 300D) as a start point and one of the plurality of transport devices (300A - 300D) as an end point, and establishing the first communication path (201) between the communication devices (200A - 200H) by setting a correspondence between the first communication path (201) and the second communication path (302) to one of the plurality of transport devices (300A - 300D) constituting the second communication path (302), wherein:
a first communication protocol used for communicating data via the first communication path (201) and a second communication protocol used for communicating data via the second communication path (302) are different from each other;
the central control computer (100) is capable of processing the first communication protocol;
the central control computer (100) sets, in order that an interface of one of the plurality of transport devices (300A - 300D) coupled to the communication device (200A - 200H) is, in a pseudo manner, recognized as an interface of the communication device (200A - 200H) by a communication device (200A - 200H) of a coupling destination, identification information on the interface in the first communication protocol to the interface of the one of the plurality of transport devices (300A - 300D) coupled to the communication device (200A - 200H);
one of the plurality of transport devices (300A - 300D) transmits a coupling check request for checking coupling from the communication device (200A - 200H) to a loopback point to the central control computer (100), in a case of receiving from the communication device (200A - 200H) the coupling check request; and
the central control computer (100) is configured to:
identify the loopback point based on the received coupling check request, in a case of receiving the coupling check request from the one of the plurality of transport devices (300A - 300D);
instruct, depending on the identified loopback point, the one of the plurality of transport devices (300A - 300D) constituting the second communication path (302) to check coupling of the second communication path (302); and
transmit, depending on a result of the check of the coupling executed by the one of the plurality of transport devices (300A - 300D), a coupling check response to the one of the plurality of transport devices (300A - 300D) which has transmitted the coupling check request, the coupling check response being a response to the coupling check request to be returned to the communication device (200A - 200H) which has transmitted the coupling check request.

2. The transport system according to claim 1, wherein the central control computer (100) instructs, in a case of identifying that the loopback point of the received coupling check request is a pseudo interface which is set to one of the plurality of transport devices (300A - 300D) coupled to a communication device (200A - 200H) other than the communication device (200A - 200H) which has transmitted the coupling check request, the one of the plurality of transport devices (300A - 300D) constituting the second communication path (302) to check the coupling of the second communication path (302) established by the one of the plurality of transport devices (300A - 300D) to which the pseudo interface as the loopback point is set.

3. The transport system according to claims 1 or 2, wherein:
the central control computer (100) is configured to:
instruct, in a case of identifying that the loopback point of the received coupling check request is a communication device (200A - 200H) on the first communication path (201) reached by routing through the second communication path (302) from the communication device (200A - 200H) which has transmitted the coupling check request, the one of the plurality of transport devices (300A - 300D) constituting the second communication path (302) associated with the first communication path (201) for communicating to/from the communication device (200A - 200H) as the loopback point to check the coupling of the second communication path (302); and
transmit, the received coupling check request to the one of the plurality of transport devices (300A - 300D) as the end point of the second communication path (302), in a case of confirming the coupling of the second communication path (302),;
the one of the plurality of transport devices (300A - 300D) as the end point of the second communication path (302) is configured to:
transmit the received coupling check request to the communication device (200A - 200H) as the loopback point, in a case of receiving the coupling check request from the central control computer (100); and
transmit the received coupling check response to the central control computer (100), in a case of receiving a coupling check response from the communication device (200A - 200H) as the loopback point;
the central computer (100) transmits the received coupling check response to the one of the plurality of transport devices (300A - 300D) as the start point of the second communication path (302), in a case of receiving the coupling check response from the one of the plurality of transport devices (300A - 300D) as the end point of the second communication path (302); and
the one of the plurality of transport devices (300A - 300D) as the start point of the second communication path (302) transmits the received coupling check response to the communication device (200A - 200H) which has transmitted the coupling check request, in a case of receiving the coupling check response from the central control computer (100).

4. The transport system according to claims 1 or 2, wherein:
the central control computer (100) transmits, in a case of identifying that the loopback point of the received coupling check request is a communication device (200A - 200H) on the first communication path (201) reached by routing through the second communication path (302) from the communication device (200A - 200H) which has transmitted the coupling check request, the received coupling check request to the one of the plurality of transport devices (300A - 300D) as the start point of the second communication path (302);
the one of the plurality of transport devices (300A - 300D) as the start point of the second communication path (302) transmits the received coupling check request, via the second communication path (302), to the one of the plurality of transport devices (300A - 300D) as the end point of the second communication path (302), in a case of receiving the coupling check request from the central control computer (100);
the one of the plurality of transport devices (300A - 300D) as the end point of the second communication path (302) is configured to:
transmit the received coupling check request to the communication device (200A - 200H) as the loopback point, in a case of receiving the coupling check request from the one of the plurality of transport devices (300A - 300D) as the start point of the second communication path (302); and
transmit the received coupling check response to the central control computer (100), in a case of receiving a coupling check response from the communication device (200A - 200H) as the loopback point;
the central computer (100) transmits the received coupling check response to the one of the plurality of transport devices (300A - 300D) as the start point of the second communication path (302), in a case of receiving the coupling check response from the one of the plurality of transport devices (300A - 300D) as the end point of the second communication path (302),; and
the one of the plurality of transport devices (300A - 300D) as the start point of the second communication path (302) transmits the received coupling check response to the communication device (200A - 200H) which has transmitted the coupling check request, in a case of receiving the coupling check response from the central control computer (100).

5. The transport system according to claim 1, wherein:
the central control computer (100) transmits, in a case of identifying that the loopback point of the received coupling check request is a pseudo interface which is set to one of the plurality of transport devices (300A - 300D) coupled to the communication device (200A - 200H) which has transmitted the coupling check request, the coupling check response to one of the plurality of transport devices (300A - 300D) which has received the coupling check request; and
the one of the plurality of transport devices (300A - 300D) which has received the coupling check response transmits the received coupling check response to the communication device (200A - 200H) which has transmitted the coupling check request.

6. The transport system according to at least one of claims 1 to 5, wherein:
the central control computer (100) instructs the one of the plurality of transport devices (300A - 300D) as the start point to check the coupling between the one of the plurality of transport devices (300A - 300D) as the start point of the second communication path (302) and the one of the plurality of transport devices (300A - 300D) as the end point of the second communication path (302), by using a coupling check function of the second communication protocol, in a case of giving an instruction on the check of the coupling of the second communication path (302); and
the one of the plurality of transport devices (300A - 300D) as the start point of the second communication path (302) checks, by using the coupling check function of the second communication protocol, the coupling up to the one of the plurality of transport devices (300A - 300D) as the end point, in a case of being instructed to check the coupling of the second communication path (302).

7. The transport system according to at least one of claims 1 to 5, wherein:
the central control computer (100) instructs the one of the plurality of transport devices (300A - 300D) as the start point to check the coupling to all transport devices (300A - 300D) which are routed through from the one of the plurality of transport devices (300A - 300D) as the start point of the second communication path (302) to the one of the plurality of transport devices (300A - 300D) as the end point of the second communication path (302), by using a coupling check function of the second communication protocol, in a case of giving an instruction on the check of the coupling of the second communication path (302); and
the one of the plurality of transport devices (300A - 300D) as the start point of the second communication path (302) checks, by using the coupling check function of the second communication protocol, the coupling to all the transport devices (300A - 300D) which are routed through up to the one of the plurality of transport devices (300A - 300D) as the end point, in a case of being instructed to check the coupling of the second communication path (302).

8. A central control computer for establishing,
a second communication path (302), in a transport network including a plurality of transport devices (300A - 300D) coupled to a first communication path (201), the second communication path (302) being between one of the plurality of transport devices (300A - 300D) as a start point and one of the plurality of transport devices (300A - 300D) as an end point, and
establishing, by setting a correspondence between the first communication path (201) and the second communication path (302) to one of the plurality of transport devices (300A - 300D) constituting the second communication path (302), the first communication path (201) between communication devices (200A - 200H), wherein:
the first communication path (201) is established between a communication device (200A - 200H) as a start point and a communication device (200A - 200H) as an end point, in an autonomous and decentralized manner by the communication devices (200A - 200H) using a control packet;
a first communication protocol used for communicating data via the first communication path (201) and a second communication protocol used for communicating data via the second communication path (302) are different from each other;
the central control computer (100) is capable of processing the first communication protocol; and
the central control computer (100) is configured to:
set, in order that an interface of one of the plurality of transport devices (300A - 300D) coupled to the communication device (200A - 200H) is, in a pseudo manner, recognized as an interface of the communication device (200A - 200H) by a communication device (200A - 200H) of a coupling destination, identification information on the interface in the first communication protocol to the interface of the one of the plurality of transport devices (300A - 300D) coupled to the communication device (200A - 200H);
identify a loopback point based on a coupling check request for checking coupling from the communication device (200A - 200H) to the loopback point, in a case of receiving from one of the plurality of transport devices (300A - 300D) the coupling check request;
instruct, depending on the identified loopback point, the one of the plurality of transport devices (300A - 300D) constituting the second communication path (302), to check coupling of the second communication path (302); and
transmit, depending on a result of the check of the coupling executed by the one of the plurality of transport devices (300A - 300D), a coupling check response to the one of the plurality of transport devices (300A - 300D), the coupling check response being a response to the coupling check request to be returned to the communication device (200A - 200H) which has transmitted the coupling check request.

9. The central control computer according to claim 8, wherein the central control computer (100) instructs, in a case of identifying that the loopback point of the received coupling check request is a pseudo interface which is set to one of the plurality of transport devices (300A - 300D) coupled to a communication device (200A - 200H) other than the communication device (200A - 200H) which has transmitted the coupling check request, the one of the plurality of transport devices (200A-200H)constituting the second communication path (302) to check the coupling of the second communication path (302) established by the one of the plurality of transport devices (300A - 300D) to which the pseudo interface as the loopback point is set.

10. The central control computer according to claims 8 or 9, wherein the central control computer (100) is further configured to:
instruct, in a case of identifying that the loopback point of the received coupling check request is a communication device (200A - 200H) on the first communication path (201) reached by routing through the second communication path (302) from the communication device (200A - 200H) which has transmitted the coupling check request, the one of the plurality of transport devices (300A - 300D) constituting the second communication path (302) for communicating to/from the communication device (200A - 200H) as the loopback point to check the coupling of the second communication path (302) associated with the first communication path (201);
transmit, in order to transmit the received coupling check request to the communication device (200A - 200H) as the loopback point, the received coupling check request to the one of the plurality of transport devices (300A - 300D) as the end point of the second communication path (302), in a case where the coupling of the second communication path (302) is checked; and
transmit, in order to transmit the received coupling check response to the communication device (200A - 200H) which has transmitted the coupling check request, the received coupling check response to the one of the plurality of transport devices (300A - 300D) as the start point of the second communication path (302), in a case of receiving the coupling check response transmitted by the communication device (200A - 200H) as the loopback point via the one of the plurality of transport devices (300A - 300D) as the end point of the second communication path (302).

11. The central control computer according to claim 8 or 9, wherein the central computer (100) is further configured to:
transmit, in a case of identifying that the loopback point of the received coupling check request is a communication device (200A - 200H) on the first communication path (201) reached by routing through the second communication path (302) from the communication device (200A - 200H) which has transmitted the coupling check request, in order to transmit the coupling check request to the communication device (200A - 200H) as the loopback point via the second communication path (302), the received coupling check request to the one of the plurality of transport devices (300A - 300D) as the start point of the second communication path (302); and
transmit, in order to transmit the received coupling check response to the communication device (200A - 200H) which has transmitted the coupling check request, the received coupling check response to the one of the plurality of transport devices (300A - 300D) as the start point of the second communication path (302) in a case of receiving the coupling check response transmitted by the communication device (200A - 200H) as the loopback point via the one of the plurality of transport devices (300A - 300D) as the end point of the second communication path (302).

12. The central control computer according to claim 8, wherein the central control computer (100) transmits, in a case of identifying that the loopback point of the received coupling check request is a pseudo interface which is set to one of the plurality of transport devices (300A - 300D) coupled to the communication device (200A - 200H) which has transmitted the coupling check request, in order to transmit the coupling check response to the communication device (200A - 200H) which has transmitted the coupling check request, the coupling check response to one of the plurality of transport devices (300A - 300D) which has received the coupling check request.

13. The central control computer according to claim 8, wherein the central control computer (100) instructs, the one of the plurality of transport devices (300A - 300D) as the start point to check the coupling between the one of the plurality of transport devices (300A - 300D) as the start point of the second communication path (302) and the one of the plurality of transport devices (300A - 300D) as the end point of the second communication, by using a coupling check function of the second communication protocol, in a case of giving an instruction on the check of the coupling of the second communication path (302).

14. The central control computer according to claim 8, wherein the central control computer (100) instructs, the one of the plurality of transport devices (300A - 300D) as the start point to check the coupling to all transport devices (300A - 300D) which are routed through from the one of the plurality of transport devices (300A - 300D) as the start point of the second communication path (302) to the one of the plurality of transport devices (300A - 300D) as the end point of the second communication path (302), by using a coupling check function of the second communication protocol, in a case of giving an instruction on the check of the coupling of the second communication path (302).

15. A transport method for transporting data in a transport system, the transport system having,
a plurality of transport devices (300A - 300D) to be coupled to a first communication path (201) which is established between a communication device (200A - 200H) as a start point and a communication device (200A - 200H) as an end point in an autonomous and decentralized manner by using a control packet; and
a central control computer (100) for establishing a second communication path (302) in a transport network including the plurality of transport devices (300A - 300D), between one of the plurality of transport devices (300A - 300D) as a start point and one of the plurality of transport devices (300A - 300D) as an end point, and establishing the first communication path (201) between the communication devices (200A - 200H) by setting a correspondence between the first communication path (201) and the second communication path (302) to one of the plurality of transport devices (300A - 300D) constituting the second communication path (302),
a first communication protocol used for communicating data via the first communication path (201) and a second communication protocol used for communicating data via the second communication path (302) being different from each other,
the central control computer (100) being capable of processing the first communication protocol,
the central control computer (100) setting, in order that an interface of one of the plurality of transport devices (300A - 300D) coupled to the communication device (200A - 200H) is, in a pseudo manner, recognized as an interface of the communication device (200A - 200H) by a communication device (200A - 200H) of a coupling destination, identification information on the interface in the first communication protocol to the interface of the one of the plurality of transport devices (300A - 300D) coupled to the communication device (200A - 200H),
the transport method comprising the steps of:
transmitting, by one of the plurality of transport devices (300A - 300D), a coupling check request for checking coupling from the communication device (200A - 200H) to a loopback point to the central control computer (100), in a case of receiving from the communication device (200A - 200H) the coupling check request;
identifying, by the central control computer (100), the loopback point based on the received coupling check request, in a case of receiving the coupling check request from the one of the plurality of transport devices (300A - 300D);
instructing, by the central control computer (100), depending on the identified loopback point, the one of the plurality of transport devices (300A - 300D) constituting the second communication path (302) to check coupling of the second communication path (302); and
transmitting, by the central control computer (100), depending on a result of the check of the coupling executed by the one of the plurality of transport devices (300A - 300D), a coupling check response to the one of the plurality of transport devices (300A - 300D), the coupling check response being a response to the coupling check request to be returned to the communication device (200A - 200H) which has transmitted the coupling check request.

## Patentansprüche

1. Transportsystem, das umfasst:
mehrere Transportvorrichtungen (300A-300D), die mit einem ersten Kommunikationsweg, der zwischen einer Kommunikationsvorrichtung (200A-200H) als einem Startpunkt und einer Kommunikationsvorrichtung (200A-200H) als einem Endpunkt auf eine autonome und dezentralisierte Art durch die Kommunikationsvorrichtungen (200A-200H) unter Verwendung eines Steuerpakets aufgebaut ist, gekoppelt sein sollen; und
einen zentralen Steuercomputer (100) zum Aufbauen eines zweiten Kommunikationswegs (302) in einem Transportnetz (30), der die mehreren Transportvorrichtungen (300A-300D) enthält, zwischen einer aus den mehreren Transportvorrichtungen (300A-300D) als einem Startpunkt und einer aus den mehreren Transportvorrichtungen (300A-300D) als einem Endpunkt, und zum Aufbauen des ersten Kommunikationswegs (201) zwischen den Kommunikationsvorrichtungen (200A-200H) durch Einstellen einer Zuordnung zwischen dem ersten Kommunikationsweg (201) und dem zweiten Kommunikationsweg (302) zu einer aus den mehreren Transportvorrichtungen (300A-300D), die den zweiten Kommunikationsweg (302) bilden, wobei:
ein erstes Kommunikationsprotokoll, das zum Kommunizieren von Daten über den ersten Kommunikationsweg (201) verwendet wird, und ein zweites Kommunikationsprotokoll, das zum Kommunizieren von Daten über den zweiten Kommunikationsweg (302) verwendet wird, voneinander verschieden sind;
der zentrale Steuercomputer (100) das erste Kommunikationprotokoll verarbeiten kann;
der zentrale Steuercomputer (100), damit eine Schnittstelle einer der mehreren Kommunikationsvorrichtungen (300A-300D), die mit der Kommunikationsvorrichtung (200A-200H) gekoppelt ist, auf eine Pseudo-Art durch eine Kommunikationsvorrichtung (200A-200H) eines Kopplungsziels als eine Schnittstelle der Kommunikationsvorrichtung (200A-200H) erkannt wird, Identifikationsinformationen über die Schnittstelle in dem ersten Kommunikationsprotokoll für die Schnittstelle der einen aus den mehreren Kommunikationsvorrichtungen (300A-300D), die mit der Kommunikationsvorrichtung (200A-200H) gekoppelt ist, einstellt;
eine der mehreren Transportvorrichtungen (300A-300D) eine Kopplungsüberprüfungsanforderung zum Überprüfung der Kopplung von der Kommunikationsvorrichtung (200A-200H) zu einem Rückschleifenpunkt in einem Fall des Empfangens der Kopplungsüberprüfungsanforderung von der Kommunikationsvorrichtung (200A-200H) zu dem zentralen Steuercomputer (100) sendet; und
der zentrale Steuercomputer (100) konfiguriert ist:
den Rückschleifenpunkt basierend auf der empfangenen Kopplungsüberprüfungsanforderung in einem Fall des Empfangens der Kopplungsüberprüfungsanforderung von einer aus den mehreren Transportvorrichtungen (300A-300D) zu identifizieren;
abhängig von dem identifizierten Rückschleifenpunkt die eine aus den mehreren Transportvorrichtungen (300A-300D), die den zweiten Kommunikationsweg (302) bilden, anzuweisen, die Kopplung des zweiten Kommunikationswegs (302) zu überprüfen; und
abhängig von einem Ergebnis der Überprüfung des Kopplung, die durch die eine aus den mehreren Transportvorrichtungen (300A-300D) ausgeführt ist, eine Kopplungsüberprüfungsantwort zu der einen aus den mehreren Transportvorrichtungen (300A-300D), die die Kopplungsüberprüfungsanforderung gesendet hat, zu senden, wobei die Kopplungsüberprüfungsantwort eine Antwort auf die Kopplungsüberprüfungsanforderung ist, die zu der Kommunikationsvorrichtung (200A-200H) zurückgegeben werden soll, die die Kopplungsüberprüfungsanforderung gesendet hat.

2. Transportsystem nach Anspruch 1, wobei der zentrale Steuercomputer (100) in einem Fall des Identifizierens, dass der Rückschleifenpunkt der empfangenen Kopplungsüberprüfungsanforderung eine Pseudo-Schnittstelle ist, die für eine aus den mehreren Transportvorrichtungen (300A-300D) eingestellt ist, die mit einer Kommunikationsvorrichtung (200A-200H) gekoppelt ist, die nicht die Kommunikationsvorrichtung (200A-200H) ist, die die Kopplungsüberprüfungsanforderung gesendet hat, die eine aus den mehreren Transportvorrichtungen (300A-300D), die den zweiten Kommunikationsweg (302) bilden, anweist, die Kopplung des zweiten Kommunikationswegs (302), der durch die eine aus den mehreren Transportvorrichtungen (300A-300D), für die die Pseudo-Schnittstelle als der Rückschleifenpunkt eingestellt ist, aufgebaut ist, zu überprüfen.

3. Transportsystem nach den Ansprüchen 1 oder 2, wobei:
der zentrale Steuercomputer (100) konfiguriert ist:
in einem Fall des Identifizierens, dass der Rückschleifenpunkt der empfangenen Kopplungsüberprüfungsanforderung eine Kommunikationsvorrichtung (200A-200H) auf dem ersten Kommunikationsweg (201) ist, der durch Leiten durch den zweiten Kommunikationsweg (302) von der Kommunikatiönsvorrichtung (200A-200H), die die Kopplungsüberprüfungsanforderung gesendet hat, erreicht wird, die eine aus den mehreren Transportvorrichtungen (300A-300D), die den zweiten Kommunikationsweg (302) bilden, der dem ersten Kommunikationsweg (201) zum Kommunizieren zu/von der Kommunikationsvorrichtung (200A-200H) als den Rückschleifenpunkt zugeordnet ist, anzuweisen, die Kopplung des zweiten Kommunikationswegs (302) zu überprüfen; und
die empfangene Kopplungsüberprüfungsanforderung zu der einen aus den mehreren Transportvorrichtungen (300A-300D) als dem Endpunkt des zweiten Kommunikationswegs (302) in einem Fall der Bestätigung der Kopplung des zweiten Kommunikationswegs (302) zu senden;
die eine aus den mehreren Transportvorrichtungen (300A-300D) als der Endpunkt des zweiten Kommunikationswegs (302) konfiguriert ist:
die empfangene Kopplungsüberprüfungsanforderung zu der Kommunikationsvorrichtung (200A-200H) als dem Rückschleifenpunkt in einem Fall des Empfangens der Kopplungsüberprüfungsanforderung von dem zentralen Steuercomputer (100) zu senden; und
die empfangene Kopplungsüberprüfungsantwort zu dem zentralen Steuercomputer (100) in einem Fall des Empfangens einer Kopplungsüberprüfungsantwort von der Kommunikationsvorrichtung (200A-200H) als dem Rückschleifenpunkt zu senden;
der zentrale Computer (100) die empfangene Kopplungsüberprüfungsantwort zu der einen aus den mehreren Transportvorrichtungen (300A-300D) als dem Startpunkt des zweiten Kommunikationswegs (302) in einem Fall des Empfangens der Kopplungsüberprüfungsantwort von der einen aus den mehreren Transportvorrichtungen (300A-300D) als dem Endpunkt des zweiten Kommunikationswegs (302) sendet; und
die eine aus den mehreren Transportvorrichtungen (300A-300D) als der Startpunkt des zweiten Kommunikationswegs (302) die empfangene Kopplungsüberprüfungsantwort zu der Kommunikationsvorrichtung (200A-200H), die die Kopplungsüberprüfungsanforderung gesendet hat, in einem Fall des Empfangens der Kopplungsüberprüfungsantwort von dem zentralen Steuercomputer (100) sendet.

4. Transportsystem nach den Ansprüchen 1 oder 2, wobei:
der zentrale Steüercomputer (100), in einem Fall des Identifizierens, dass der Rückschleifenpunkt der empfangenen Kopplungsüberprüfungsanforderung eine Kommunikationsvorrichtung (200A-200H) auf dem ersten Kommunikationsweg (201) ist, die durch Lenkung durch den zweiten Kommunikationsweg (302) von der Kommunikationsvorrichtung (200A-200H), die die Kopplungsüberprüfungsanforderung gesendet hat, erreicht wird, die empfangene Kopplungsüberprüfungsanforderung zu der einen aus den mehreren Transportvorrichtungen (300A-300D) als dem Startpunkt des zweiten Kommunikationswegs (302) sendet;
die eine aus den mehreren Transportvorrichtungen (300A-300D) als der Startpunkt des zweiten Kommunikationswegs (302) die empfangene Kopplungsüberprüfungsanforderung über den zweiten Kommunikationsweg (302) zu der einen aus den mehreren Transportvorrichtungen (300A-300D) als dem Endpunkt des zweiten Kommunikationswegs (302) in einem Fall des Empfangens der Kopplungsüberprüfungsanforderung von dem zentralen Steuercomputer (100) sendet;
die eine aus den mehreren Transportvorrichtungen (300A-300D) als der Endpunkt des zweiten Kommunikationswegs (302) konfiguriert ist:
die empfangene Kopplungsüberprüfungsanforderung zu der Kommunikationsvorrichtung (200A-200H) als dem Rückschleifenpunkt in einem Fall des Empfangens der Kopplungsüberprüfungsanforderung von der einen aus den mehreren Transportvorrichtungen (300A-300D) als dem Startpunkt des zweiten Kommunikationswegs (302) zu senden; und
die empfangene Kopplungsüberprüfungsantwort zu dem zentralen Steuercomputer (100) in einem Fall des Empfangens einer Kopplungsüberprüfungsantwort von der Kommunikationsvorrichtung (200A-200H) als dem Rückschleifenpunkt zu senden;
der zentrale Computer (100) die empfangene Kopplungsüberprüfungsantwort zu der einen aus den mehreren Transportvorrichtungen (300A-300D) als dem Startpunkt des zweiten Kommunikationswegs (302) in einem Fall des Empfangens der Kopplungsüberprüfungsantwort von der einen aus den mehreren Transportvorrichtungen (300A-300D) als dem Endpunkt des zweiten Kommunikationswegs (302) sendet; und
die eine aus den mehreren Transportvorrichtungen (300A-300D) als der Startpunkt des zweiten Kommunikationswegs (302) die empfangene Kopplungsüberprüfungsantwort zu der Kommunikationsvorrichtung (200A-200H), die die Kopplungsüberprüfungsanforderung gesendet hat, in einem Fall des Empfangens der Kopplungsüberprüfungsantwort von dem zentralen Steuercomputer (100) sendet.

5. Transportsystem nach Anspruch 1, wobei:
der zentrale Steuercomputer (100) in einem Fall des Identifizierens, dass der Rückschleifenpunkt der empfangenen Kopplungsüberprüfungsantwort eine Pseudo-Schnittstelle ist, die für eine aus den mehreren Transportvorrichtungen (300A-300D), die mit der Kommünikationsvorrichtung (200A-200H) gekoppelt ist, die die Kopplungsüberprüfüngsanforderung gesendet hat, eingestellt ist, die Kopplungsüberprüfungsantwort zu einer aus den mehreren Transportvorrichtungen (300A-300D), die die Kopplungsüberprüfungsanforderung empfangen hat, sendet; und
die eine aus den mehreren Transportvorrichtungen (300A-300D), die die Kopplungsüberprüfungsantwort empfangen hat, die empfangene Kopplungsüberprüfungsantwort zu der Kommunikationsvorrichtung (200A-200H), die die Kopplungsüberprüfungsanforderung gesendet hat, sendet.

6. Transportsystem nach wenigstens einem der Ansprüche 1 bis 5, wobei:
der zentrale Steuercomputer (100) die eine aus den mehreren Transportvorrichtungen (300A-300D) als den Startpunkt anweist, die Kopplung zwischen der einen aus den mehreren Transportvorrichtungen (300A-300D) als dem Startpunkt des zweiten Kommunikationswegs (302) und der einen aus den mehreren Transportvorrichtungen (300A-300D) als dem Endpunkt der zweiten Kommunikationswegs (302) durch Verwenden eines Kopplungsüberprüfungsfunktion des zweiten Kommunikationsprotokolls in einem Fall, in dem eine Anweisung über die Überprüfung der Kopplung des zweiten Kommunikationswegs (302) gegeben wird, zu überprüfen; und
die eine aus den mehreren Transportvorrichtungen (300A-300D) als der Startpunkt des zweiten Kommunikationswegs (302) durch Verwenden der Kopplungsüberprüfungsfunktion des zweiten Kommunikationsprotokolls die Kopplung bis zu der einen aus den mehreren Transportvorrichtungen (300A-300D) als dem Endpunkt in einem Fall, in dem sie angewiesen wird, die Kopplung des zweiten Kommunikationswegs (302) zu überprüfen, überprüft.

7. Transportsystem nach wenigstens einem der Ansprüche 1 bis 5, wobei:
der zentrale Steuercomputer (100) die eine aus den mehreren Transportvorrichtungen (300A-300D) als den Startpunkt anweist, die Kopplung mit allen Transportvorrichtungen (300A-300D), die aus der einen aus den mehreren Transportvorrichtungen (300A-300D) als dem Startpunkt des zweiten Kommunikationswegs (302) zu der einen aus den mehreren Transportvorrichtungen (300A-300D) als dem Endpunkt der zweiten Kommunikationswegs (302) durchgeleitet werden, durch Verwenden einer Kopplungsüberprüfungsfunktion des zweiten Kommunikationsprotokolls in einem Fall, in dem eine Anweisung über die Überprüfung der Kopplung des zweiten Kommunikationswegs (302) gegeben wird, zu überprüfen; und
die eine aus den mehreren Transportvorrichtungen (300A-300D) als der Startpunkt des zweiten Kommunikationswegs (302) durch Verwenden der Kopplungsüberprüfungsfunktion des zweiten Kommunikationsprotokolls die Kopplung mit allen Transportvorrichtungen (300A-300D), die bis zu einer der mehreren Transportvorrichtungen (300A-300D) als dem Endpunkt durchgeleitet werden, in einem Fall, in dem sie angewiesen wird, die Kopplung des zweiten Kommunikationswegs (302) zu überprüfen, überprüft.

8. Zentraler Steuercomputer zum Aufbauen
eines zweiten Kommunikationswegs (302) in einem Transportnetz, der mehrere Transportvorrichtungen (300A-300D) enthält, die mit einem ersten Kommunikationsweg (201) gekoppelt sind, wobei sich der zweite Kommunikationsweg (302) zwischen einer aus den mehreren Transportvorrichtungen (300A-300D) als einem Startpunkt und einer aus den mehreren Transportvorrichtungen (300A-300D) als einem Endpunkt befindet, und
Aufbauen des ersten Kommunikationswegs (201) zwischen Kommunikationsvorrichtungen (200A-200H) durch Einstellen einer Zuordnung zwischen dem ersten Kommunikationsweg (201) und dem zweiten Kommunikationsweg (302) zu einer aus den mehreren Transportvorrichtungen (300A-300D), die den zweiten Kommunikationsweg (302) bilden, wobei:
der erste Kommunikationsweg zwischen einer Kommunikationsvorrichtung (200A-200H) als einem Startpunkt und einer Kommunikationsvorrichtung (200A-200H) als einem Endpunkt auf eine autonome und dezentralisierte Art durch die Kommunikationsvorrichtungen (200A-200H) unter Verwendung eines Steuerpakets aufgebaut wird;
ein erstes Kommunikationsprotokoll, das zum Kommunizieren von Daten über den ersten Kommunikationsweg (201) verwendet wird, und ein zweites Kommunikationsprotokoll, das zum Kommunizieren von Daten über den zweiten Kommunikationsweg (302) verwendet wird, voneinander verschieden sind;
der zentrale Steuercomputer (100) das erste Kommunikationsprotokoll verarbeiten kann; und
der zentrale Steuercomputer (100) konfiguriert ist:
damit eine Schnittstelle einer der mehreren Kommunikationsvorrichtungen (300A-300D), die mit der Kommunikationsvorrichtung (200A-200H) gekoppelt ist, auf eine Pseudo-Art als eine Schnittstelle der Kommunikationsvorrichtung (200A-200H) durch eine Kommunikationsvorrichtung (200A-200H) eines Kopplungsziels erkannt wird, Identifikationsinformationen über die Schnittstelle in dem ersten Kommunikationsprotokoll für die Schnittstelle der einen aus den mehreren Kommunikationsvorrichtungen (300A-300D), die mit der Kommunikationsvorrichtung (200A-200H) gekoppelt ist, einzustellen;
einen Rückschleifenpunkt basierend auf einer Kopplungsüberprüfungsanforderung zum Überprüfen der Kopplung von der Kommunikationsvorrichtung (200A-200H) zu dem Rückschleifenpunkt in einem Fall des Empfangens der Kopplungsüberprüfungsanforderung von einer aus den mehreren Transportvorrichtungen (300A-300D) zu identifizieren;
abhängig von dem identifizierten Rückschleifenpunkt die eine aus den mehreren Transportvorrichtungen (300A-300D), die den zweiten Kommunikationsweg (302) bilden, anzuweisen, die Kopplung des zweiten Kommunikationswegs (302) zu überprüfen; und
abhängig von einem Ergebnis der Überprüfung des Kopplung, die durch die eine aus den mehreren Transportvorrichtungen (300A-300D) ausgeführt ist, eine Kopplungsüberprüfungsantwort zu dem einen aus den mehreren Transportvorrichtungen (300A-300D) zu senden, wobei die Kopplungsüberprüfungsantwort eine Antwort auf die Kopplungsüberprüfungsanforderung ist, die zu der Kommunikationsvorrichtung (200A-200H), die die Kopplungsüberprüfungsanforderung gesendet hat, zurückgegeben werden soll.

9. Zentraler Steuercomputer nach Anspruch 8, wobei der zentrale Steuercomputer (100) in einem Fall des Identifizierens, dass der Rückschleifenpunkt der empfangenen Kopplungsüberprüfungsanforderung eine Pseudo-Schnittstelle ist, die für eine aus den mehreren Trarisportvorrichtungen (300A-300D) eingestellt ist, die mit einer Kommunikationsvorrichtung (200A-200H) gekoppelt ist, die nicht die Kommunikationsvorrichtung (200A-200H) ist, die die Kopplungsüberprüfungsanforderung gesendet hat, die eine aus den mehreren Transportvorrichtungen (200A-200D), die den zweiten Kommunikationsweg (302) bilden, anweist, die Kopplung des zweiten Kommunikationswegs (302), der durch die eine aus den mehreren Transportvorrichtungen (300A-300D), für die die Pseudo-Schnittstelle als der Rückschleifenpunkt eingestellt ist, zu überprüfen.

10. Zentraler Steuercomputer nach den Ansprüchen 8 oder 9, wobei der zentrale Steuercomputer (100) ferner konfiguriert ist:
in einem Fall des Identifizierens, dass der Rückschleifenpunkt der empfangenen Kopplungsüberprüfungsanforderung eine Kommunikationsvorrichtung (200A-200H) auf dem ersten Kominunikationsweg (201) ist, der durch Leiten durch zweiten Kommunikationsweg (302) von der Kommunikationsvorrichtung (200A-200H) erreicht wird, die die Kopplungsüberprüfungsanforderung gesendet hat, die eine aus den mehreren Transportvorrichtungen (300A-300D), die den zweiten Kommunikationsweg (302) bilden, der dem ersten Kommunikationsweg (200) zum Kommunizieren zu/von der Kommunikationsvorrichtung (200A-302H) als der Rückschleifenpunkt zugeordnet ist, anzuweisen, die Kopplung des zweiten Kommunikationswegs (201) zu überprüfen;
um die empfangene Kopplungsüberprüfungsanforderung zu der Kommunikationsvorrichtung (200A-200H) als dem Rückschleifenpunkt zu senden, die empfangene Kopplungsüberprüfungsanforderung zu der einen aus den mehreren Transportvorrichtungen (300A-300D) als dem Endpunkt des zweiten Kommunikationswegs (302) in einem Fall, in dem die Kopplung des zweiten Kommunikationswegs (302) überprüft wird, zu senden; und
um die empfangene Kopplungsüberprüfungsantwort zu der Kommunikationsvorrichtung (200A-200H), die die Kopplungsüberprüfungsanforderung gesendet hat, zu senden, die empfangene Kopplungsüberprüfungsantwort zu der einen aus den mehreren Transportvorrichtungen (300A-300D) als dem Startpunkt des zweiten Kommunikationswegs (302) in einem Fall des Empfangens der Kopplungsüberprüfungsantwort, die durch die Kommunikationsvorrichtung (200A-200H) als dem Rückschleifenpunkt über die eine aus den mehreren Transportvorrichtungen (300A-300D) als dem Endpunkt des zweiten Kommunikationswegs (302) gesendet wird, zu senden.

11. Zentraler Steuercomputer nach Anspruch 8 oder 9, wobei der zentrale Computer (100) ferner konfiguriert ist:
in einem Fall des Identifizierens, dass der Rückschleifenpunkt der empfangenen Kopplungsüberprüfungsanforderung eine Kommunikationsvorrichtung (200A-200H) auf dem ersten Kommunikationsweg (201) ist, der durch Leiten durch den zweiten Kommunikationsweg (302) von der Kommunikationsvorrichtung (200A-200H), die die Kopplungsüberprüfungsanforderung gesendet hat, erreicht wird, um die Kopplungsüberprüfungsanforderung zu der Kommunikationsvorrichtung (200A-200H) als dem Rückschleifenpunkt über den zweiten Kommunikationsweg (302) zu senden, die empfangene Kopplungsüberprüfungsanforderung zu der einen aus den mehreren Transportvorrichtungen (300A-300D) als dem Startpunkt des zweiten Kommunikationswegs (302) zu senden; und
um die empfangene Kopplungsüberprüfungsantwort zu der Kommunikationsvorrichtung (200A-200H), die die Kopplungsüberprüfungsanforderung gesendet hat, zu senden, die empfangene Kopplungsüberprüfungsantwort zu der einen aus den mehreren Transportvorrichtungen (300A-300D) als dem Startpunkt des zweiten Kommunikationswegs (302), in einem Fall des Empfangens der Kopplungsüberprüfungsantwort, die durch die Kommunikationsvorrichtung (200A-200H) als dem Rückschleifenpunkt über die eine aus den mehreren Transportvorrichtungen (300A-300D) als dem Endpunkt des zweiten Kommunikationswegs (302). gesendet wird, zu senden.

12. Zentraler Steuercomputer nach Anspruch 8, wobei der zentrale Steuercomputer (100) in einem Fall des Identifizierens, dass der Rückschleifenpunkt der empfangenen Kopplungsüberprüfungsanforderung eine Pseudo-Schnittstelle ist, die für eine aus den mehreren Transportvorrichtungen (300A-300D), die mit der Kommunikationsvorrichtung (200A-200H), die die Kopplungsüberprüfungsanforderung gesendet hat, gekoppelt ist, eingestellt ist, um die Kopplungsüberprüfungsantwort zu der Kommunikationsvorrichtung (200A-200H), die die Kopplungsüberprüfungsanforderung gesendet hat, zu senden, die Kopplungsüberprüfungsantwort zu der einen aus den mehreren Transportvorrichtungen (300A-300D), die die Kopplungsüberprüfungsanforderung empfangen hat, sendet.

13. Zentraler Steuercomputer nach Anspruch 8, wobei der der zentrale Steuercomputer (100) die eine aus den mehreren Transportvorrichtungen (300A-300D) als den Startpunkt anweist, die Kopplung zwischen der einen aus den mehreren Transportvorrichtungen (300A-300D) als dem Startpunkt des zweiten Kommunikationswegs (302) und der einen aus den mehreren Transportvorrichtungen (300A-300D) als dem Endpunkt der zweiten Kommunikationswegs (302) durch Verwenden eines Kopplungsüberprüfungsfunktion des zweiten Kommunikationsprotokolls in einem Fall, in dem eine Anweisung über die Überprüfung der Kopplung des zweiten Kommunikationswegs (302) gegeben wird, zu überprüfen.

14. Zentraler Steuercomputer nach Anspruch 8, wobei der zentrale Steuercomputer (100) die eine aus den mehreren Transportvorrichtungen (300A-300D) als den Startpunkt anweist, die Kopplung mit allen Transportvorrichtungen (300A-300D), die von der einen aus den mehreren Transportvorrichtungen (300A-300D) als dem Startpunkt des zweiten Kommunikationswegs (302) zu der einen aus den mehreren Transportvorrichtungen (300A-300D) als dem Endpunkt der zweiten Kommunikationswegs (302) durchgeleitet werden, durch Verwenden einer Kopplungsüberprüfungsfunktion des zweiten Kommunikationsprotokolls in einem Fall, in dem eine Anweisung über die Überprüfung der Kopplung des zweiten Kommunikationswegs (302) gegeben wird, zu überprüfen.

15. Transportverfahren zum Transportieren von Daten in einem Transportsystem, wobei das Transportsystem aufweist:
mehrere Transportvorrichtungen (300A-300D), die mit einem ersten Kommunikationsweg gekoppelt sein sollen, der zwischen einer Kommunikationsvorrichtung (200A-200H) als einem Startpunkt und einer Kommunikationsvorrichtung (200A-200H) als einem Endpunkt auf eine autonome und dezentralisierte Art durch unter Verwendung eines Steuerpakets aufgebaut ist; und
einen zentralen Steuercomputer (100) zum Aufbauen eines zweiten Kommunikationswegs (302) in einem Transportnetz (30), der die mehreren Transportvorrichtungen (300A-300D) enthält, zwischen einer aus den mehreren Transportvorrichtungen (300A-300D) als einem Startpunkt und einer aus den mehreren Transportvorrichtungen (300A-300D) als einem Endpunkt, und zum Aufbauen des ersten Kommunikationswegs (201) zwischen den Kommunikationsvorrichtungen (200A-200H) durch Einstellen einer Zuordnung zwischen dem ersten Kommunikationsweg (201) und dem zweiten Kommunikationsweg (302) zu einer aus den mehreren Transportvorrichtungen (300A-300D), die den zweiten Kommunikationsweg (302) bilden,
wobei ein erstes Kommunikationsprotokoll, das zum Kommunizieren von Daten über den ersten Kommunikationsweg (201) verwendet wird, und ein zweites Kommunikationsprotokoll, das zum Kommunizieren von Daten über den zweiten Kommunikationsweg (302) verwendet wird, voneinander verschieden sind,
der zentrale Steuercomputer (100) das erste Kommunikationsprotokoll verarbeiten kann,
der zentrale Steuercomputer (100), damit eine Schnittstelle einer der mehreren Kommunikationsvorrichtungen (300A-300D), die mit der Kommunikationsvorrichtung (200A-200H) auf eine Pseudo-Art gekoppelt ist, als eine Schnittstelle der Kommunikationsvorrichtung (200A-200H) durch eine Kommunikationsvorrichtung (200A-200H) eines Kopplungsziels erkannt wird, Identifikationsinformationen über die Schnittstelle in dem ersten Kommunikationsprotokoll für die Schnittstelle der einen aus den mehreren Kommunikationsvorrichtungen (300A-300D), die mit der Kommunikationsvorrichtung (200A-200H) gekoppelt ist, einstellt,
wobei das Transportverfahren die Schritte umfasst:
Senden durch eine der mehreren Transportvorrichtungen (300A-300D) einer Kopplungsüberprüfungsanforderung zum Überprüfen der Kopplung von der Kommunikationsvorrichtung (200A-200H) zu einem Rückschleifenpunkt zu dem zentralen Steuercomputer (100) in einem Fall des Empfangens der Kopplungsüberprüfungsanforderung von der Kommunikationsvorrichtung (200A-200H).
Identifizieren durch den zentralen Steuercomputer (100) des Rückschleifenpunkts basierend auf der empfangenen Kopplungsüberprüfungsanforderung in einem Fall des Empfangens der Kopplungsüberprüfungsanforderung von der einen aus den mehreren Transportvorrichtungen (300A-300D);
Anweisen durch den zentralen Steuercomputer (100) abhängig von dem identifizierten Rückschleifenpunkt der einen aus den mehreren Transportvorrichtungen (300A-300D), die den zweiten Kommunikationsweg (302) bilden, die Kopplung des zweiten Kommunikationswegs (302) zu überprüfen; und
Senden durch den zentralen Steuercomputer (100) abhängig von einem Ergebnis der Überprüfung der Kopplung, die durch die eine aus den mehreren Transportvorrichtungen (100A-300D) ausgeführt ist, einer Kopplungsüberprüfungsantwort zu der einen aus den mehreren Transportvorrichtungen (300A-300D), wobei die Kopplungsüberprüfungsantwort eine Antwort auf die Kopplungsüberprüfungsanforderung ist, die zu der Kommunikationsvorrichtung (200A-200H), die die Kopplungsüberprüfungsanförderung gesendet hat, zurückgegeben werden soll.

## Revendications

1. Système de transport, comprenant :
une pluralité de dispositifs de transport (300A - 300D) destinés à être couplés à un premier trajet de communication qui est établi entre un dispositif de communication (200A - 200H) à titre de point de départ et un dispositif de communication (200A - 200H) à titre de point final d'une manière autonome et décentralisée par les dispositifs de communication (200A - 200H) utilisant un paquet de contrôle; et
un ordinateur central de commande (100) pour établir un second trajet de communication (302) dans un réseau de transport (30) incluant la pluralité de dispositifs de transport (300A - 300D) entre l'un des dispositifs de la pluralité de dispositifs de transport (300A - 300D) à titre de point de départ et un dispositif parmi la pluralité de dispositifs de transport (300A - 300D) à titre de point final, et établir le premier trajet de communication (201) entre les dispositifs de communication (200A - 200H) en fixant une correspondance entre le premier trajet de communication (201) et le second trajet de communication (302) à un dispositif parmi la pluralité de dispositifs de transport (300A - 300D) constituant le second trajet de communication (302), dans lequel :
un premier protocole de communication utilisé pour communiquer des données via le premier trajet de communication (201) et un second protocole de communication utilisé pour communiquer des données via le second trajet de communication (302) sont différents l'un de l'autre ;
l'ordinateur central de commande (100) est capable de traiter le premier protocole de communication ;
l'ordinateur central de commande (100) fixe, afin qu'une interface de l'un de la pluralité de dispositifs de transport (300A - 300D) couplé au dispositif de communication (200A - 200A) soit reconnue, d'une pseudo manière, comme une interface du dispositif de communication (200A - 200H) par un dispositif de communication (200A - 200H) d'une destination de couplage, une information d'identification sur l'interface dans le premier protocole de communication vers l'interface de l'un de la pluralité de dispositifs de transport (300A - 300D) couplé au dispositif de communication (200A - 200H);
l'un de la pluralité de dispositifs de transport (300A- 300D) transmet une requête de vérification de couplage pour vérifier le couplage depuis le dispositif de communication (200A - 200H) vers un point de bouclage à l'ordinateur central de commande (100), dans le cas de la réception de la requête de vérification de couplage depuis le dispositif de communication (200A - 200H) ; et
l'ordinateur central de commande (100) est configuré pour :
identifier le point de bouclage en se basant sur la requête de vérification de couplage reçue, dans le cas de la réception de la requête de vérification de couplage depuis l'un des dispositifs parmi la pluralité de dispositifs de transport (300A - 300D) ;
donner instruction, en dépendance du point de bouclage identifié, au dispositif parmi la pluralité de dispositifs de transport (300A- 300D) constituant le second trajet de communication (302), de vérifier le couplage du second trajet de communication (302) ; et
transmettre, en dépendance d'un résultat de la vérification du couplage exécuté par le dispositif parmi la pluralité de dispositifs de transport (300A - 300D), une réponse de vérification de couplage au dispositif parmi la pluralité de dispositifs de transport (300A - 300D) qui a transmis la requête de vérification de couplage, la réponse de vérification de couplage étant une réponse à la requête de vérification de couplage à retourner au dispositif de communication (200A - 200H) qui a transmis la requête de vérification de couplage.

2. Système de transport selon la revendication 1, dans lequel , l'ordinateur central de commande (100) donne instruction, dans le cas d'identification que le point de bouclage de la requête de vérification de couplage reçu est une pseudo interface qui est fixée à l'un de la pluralité de dispositifs de transport (300A - 300D) couplé à un dispositif de communication (200A - 200H) autre que le dispositif de communication (200A - 200H) qui a transmis la requête de vérification de couplage, au dispositif parmi la pluralité de dispositifs de transport (300A - 300D) constituant le second trajet de communication (3 02) de vérifier le couplage du second trajet de communication (302) établi par le dispositif parmi la pluralité de dispositifs de transport (300A - 300D) auquel est fixée la pseudo interface à titre de point de bouclage.

3. Système de transport selon les revendications 1 ou 2, dans lequel :
l'ordinateur central de commande (100) est configuré pour :
donner instruction, dans le cas d'une identification que le point de bouclage de la requête de vérification de couplage reçu est un dispositif de communication (200A - 200H) sur le premier trajet de communication (201) atteint par routage via le second trajet de communication (302) depuis le dispositif de communication (200A - 200H) qui a transmis la requête de vérification de couplage, au dispositif parmi la pluralité de dispositifs de transport (300A - 300D) constituant le second trajet de communication (302) associé au premier trajet de communication (201) de communiquer vers/depuis le dispositif de communication (200A - 200H) à titre de point de bouclage et vérifier le couplage du second trajet de communication (302) et
transmettre la requête de vérification de couplage reçue vers le dispositif parmi la pluralité de dispositifs de transport (300A - 300D) à titre de point final du second trajet de communication (302) dans un cas où le couplage du second trajet de communication (302) est confirmé ;
le dispositif parmi la pluralité de dispositifs de transport (300A - 300D) à titre de point final du second trajet de communication (302) est configuré pour :
transmettre la requête de vérification de couplage reçue au dispositif de communication (200A - 200H) à titre de point de bouclage, dans le cas où la requête de vérification de couplage est reçue depuis l'ordinateur central de commande (100) ; et
transmettre la réponse de vérification de couplage reçue à l'ordinateur central de commande (100), dans le cas où la réponse de vérification de couplage est reçue depuis le dispositif de communication (200A - 200H) à titre de point de bouclage ;
l'ordinateur central (100) transmet la réponse de vérification de couplage reçue vers le dispositif parmi la pluralité de dispositifs de transport (300A. - 300D) à titre de point de départ du second trajet de communication (302) dans le cas où la réponse de vérification de couplage est reçue depuis le dispositif parmi la pluralité de dispositifs de transport (300A - 300D) à titre de point final du second trajet de communication (302); et
le dispositif parmi la pluralité de dispositifs de transport (300A - 300D) à titre de point de départ du second trajet de communication (302) transmet la réponse de vérification de couplage reçue au dispositif de communication (200A - 200H) qui a transmis la requête de vérification de couplage, dans le cas où il reçoit la réponse de vérification de couplage depuis l'ordinateur central de commande (100).

4. Système de transport selon les revendications 1 ou 2, dans lequel :
l'ordinateur central de commande (100) transmet, dans un cas d'identification que le point de bouclage de la requête de vérification de couplage reçu est un dispositif de communication (200A - 200H) sur le premier trajet de communication (201) atteint par le routage via le second trajet de communication (302) depuis le dispositif de communication (200A - 200H) qui a transmis la requête de vérification de couplage, la requête de vérification de couplage reçue au dispositif parmi la pluralité de dispositifs de transport (300A - 300D) à titre de point de départ du second trajet de communication (302) ;
le dispositif parmi la pluralité de dispositifs de transport (300A - 300D) à titre de point de départ du second trajet de communication (302) transmet la requête de vérification de couplage reçue, via le second trajet de communication (302), au dispositif parmi la pluralité de dispositifs de transport (300A - 300D) à titre de point final du second trajet de communication (302), dans un cas de réception de la requête de vérification de couplage depuis l'ordinateur central de commande (100);
le dispositif parmi la pluralité de dispositifs de transport (300A - 300D) à titre de point final du second trajet de communication (302) est configuré pour :
transmettre la requête de vérification de couplage reçue au dispositif de communication (200A - 200H) à titre de point de bouclage, dans un cas de réception de la requête de vérification de couplage depuis le dispositif parmi la pluralité de dispositifs de transport (300A - 300D) à titre de point de départ du second trajet de communication (302) ; et
transmettre la réponse de vérification de couplage reçue à l'ordinateur central de commande (100), dans un cas de réception d'une réponse de vérification de couplage depuis le dispositif de communication (200A - 200H) à titre de point de bouclage ;
l'ordinateur central (100) transmet la réponse de vérification de couplage reçue au dispositif parmi la pluralité de dispositifs de transport (300A - 300D) à titre de point de départ du second trajet de communication (302), dans un cas de réception de la réponse de vérification de couplage depuis le dispositif parmi la pluralité de dispositifs de transport (300A - 300D) à titre de point final du second trajet de communication (302) ; et
le dispositif parmi la pluralité de dispositifs de transport (300A - 300D) à titre de point de départ du second trajet de communication (302) transmet la réponse de vérification de couplage reçue au dispositif de communication (200A - 200H) qui a transmis la requête de vérification de couplage, dans un cas de réception de la réponse de vérification de couplage depuis l'ordinateur central de commande (100).

5. Système de transport selon la revendication 1, dans lequel :
l'ordinateur central de commande (100) transmet, dans un cas d'identification que le point de bouclage de la requête de vérification de couplage reçue est une pseudo interface qui est fixée à l'un de la pluralité de dispositifs de transport (300A - 300D) couplés au dispositif de communication (200A - 200H) qui a transmis la requête de vérification de couplage, la réponse de vérification de couplage à l'un de la pluralité de dispositifs de transport (300A - 300D) qui a reçu la requête de vérification de couplage ; et
le dispositif parmi là pluralité de dispositifs de transport (300A - 300D) qui a reçu la réponse de vérification de couplage transmet la réponse de vérification de couplage reçue au dispositif de communication (200A - 200H) qui a transmis la requête de vérification de couplage.

6. Système de transport selon l'une au moins des revendications 1 à 5, dans lequel :
l'ordinateur central de commande (100) donne instruction au dispositif dé transport parmi la pluralité de dispositifs de transport (300A - 300D) à titre ,de point de départ de vérifier le couplage entre le dispositif de la pluralité de dispositifs de transport (300A - 300D) à titre de point de départ du second trajet de communication (302) et au dispositif parmi la pluralité de dispositifs de transport (300A - 300D) à titre de point final du second trajet de communication (302), en utilisant une fonction de vérification de couplage du second protocole de communication, dans un cas où il. donne une instruction concernant la vérification du couplage du second trajet de communication (302) ; et
le dispositif parmi la pluralité de dispositifs de transport (300A - 300D) à titre de point de départ du second trajet de communication (302) vérifie, en utilisant la fonction de vérification de couplage du second protocole de communication, le couplage jusqu'au dispositif parmi la pluralité de dispositifs de transport (300A - 300D) à titre de point final, dans le cas où il reçoit instruction de vérifier le couplage du second trajet de communication (302).

7. Système de transport selon l'une au moins des revendications 1 à 5, dans lequel :
l'ordinateur central de commande (100) donne instruction au dispositif parmi la pluralité de dispositifs de transport (300A - 300D) à titre de point de départ de vérifier- le couplage vers tous les dispositifs de transport (300A - 300D) qui sont dans le routage via le dispositif parmi la pluralité de dispositifs de transport (300A - 300D) à titre de point de départ du second trajet de communication (302) vers le dispositif parmi la pluralité de dispositifs de transport (300A - 300D) à titre de point final du second trajet de communication (302), en utilisant une fonction de vérification de couplage du second protocole de communication, dans un cas où il donne une instruction quant à la vérification du couplage du second trajet de communication (302) ; et
le dispositif parmi la pluralité de dispositifs de transport (300A - 300D) à titre de point de départ du second trajet de communication (302) vérifie, en utilisant la fonction de vérification de couplage du second protocole de communication, le couplage vers tous les dispositifs de transport (300A - 300D) qui sont dans le routage jusqu'au dispositif de la pluralité de dispositifs de transport (300A - 300D) à titre de point final, dans un cas où il reçoit instruction de vérifier le couplage du second trajet de communication (302).

8. Ordinateur central de commande
pour établir un second trajet de communication (302), dans un réseau de transport incluant une pluralité de dispositifs de transport (300A - 300D) couplés à un premier trajet de communication (201), le second trajet de communication (302) étant entre un dispositif de la pluralité de dispositifs de transport (300A - 300D) à titre de point de départ et un dispositif de la pluralité de dispositifs de transport (300A - 300D) à titre de point final, et
pour établir, en fixant une correspondance entre le premier trajet de communication (201) et le second trajet de communication (302) au dispositif de la pluralité de transport (300A - 300D) constituant le second trajet de communication (302), le premier trajet de communication (201) entre des dispositifs de communication (200A - 200H), dans lequel :
le premier trajet de communication (201) est établi entre un dispositif de communication (200A - 200H) à titre de point de départ et un dispositif de communication (200A - 200H) à titre de point final, d'une manière autonome et décentralisée par les dispositifs de communication (200A - 200H) en utilisant un paquet de contrôle ;
un premier protocole de communication utilisé pour communiquer des données via le premier trajet de communication (201) et un second protocole de communication utilisé pour communiquer des données via le second trajet de communication (302) sont différents l'un de l'autre ;
l'ordinateur central de commande (100) est capable dé traiter le premier protocole de communication ; et
l'ordinateur central de commande (100) est configuré pour :
fixer, afin qu'une interface d'un dispositif de la pluralité de dispositifs de transport (300A - 300D) couplée au dispositif de communication (200A - 200H) soit reconnue, d'une pseudo manière, comme une interface du dispositif de communication (200A - 200H) par un dispositif de communication (200A - 200H) d'une destination de couplage, envoyer une information d'identification sur l'interface dans le premier protocole de communication vers l'interface du dispositif de la pluralité de dispositifs de transport (300A - 300D) couplé au dispositif de communication (200A - 200H) ;
identifier un point de bouclage en se basant sur une requête de vérification de couplage pour vérifier le couplage depuis le dispositif de communication (200A - 200H) vers le point de bouclage, dans un cas où il reçoit depuis un dispositif de la pluralité de dispositifs de transport (300A - 300D) la requête de vérification de couplage ;
donner instruction, selon le point de bouclage identifié, au dispositif parmi la pluralité de dispositifs de transport (300A - 300D) constituant le second trajet de communication (302), de vérifier le couplage du second trajet de communication (302) ; et
transmettre, selon un résultat de la vérification du couplage exécutée par le dispositif de la pluralité de dispositifs de transport (300A - 300D), une réponse de vérification de couplage au dispositif de la pluralité de dispositifs de transport (300A - 300D), la réponse de vérification de couplage étant une réponse à la requête de vérification de couplage à retourner au dispositif de communication (200A - 200H) qui a transmis la requête de vérification de couplage.

9. Ordinateur central de commande selon la revendication 8, dans lequel l'ordinateur central de commande (100) donne instruction, dans un cas où il identifie que le point de bouclage de la requête de vérification de couplage reçue est une pseudo interface qui est fixée à un dispositif de la pluralité de dispositifs de transport (300A - 300D) couplé à un dispositif de communication (200A - 200H) autre que le dispositif de communication (200A - 200H) qui a transmis la requête de vérification de couplage, au dispositif de la pluralité de dispositifs de transport (200A - 200H) constituant le second trajet de communication (302) de vérifier le couplage du second trajet de communication (302) établi par le dispositif de la pluralité de dispositifs de transport (300A - 300D) auquel est fixé la pseudo interface à titre de point de bouclage.

10. Ordinateur central de commande selon les revendications 8 ou 9, dans lequel l'ordinateur central de commande (100) est en outre configuré pour :
donner instruction, dans un cas où il identifie que le point de bouclage de la requête de vérification de couplage reçue est un dispositif de communication (200A - 200H) sur le premier trajet de communication (201) atteint par le routage via le second trajet de communication (302) depuis le dispositif de communication (200A - 200H) qui a transmis la requête de vérification de couplage, au dispositif de la pluralité de dispositifs de transport (300A - 300D). constituant le second trajet de communication (302) pour communiquer vers/depuis le dispositif de communication (200A - 200H) à titre de point de bouclage pour vérifier le couplage du second trajet de communication (302) associé au premier trajet de communication (201) ;
transmettre, afin de transmettre la requête de vérification de couplage reçue au dispositif de communication (200A - 200H) à titre de point de bouclage, la requête de vérification de couplage reçue au dispositif de la pluralité de dispositifs de transport (300A - 300D) à titre de point final du second trajet de communication (302), dans un cas où le couplage du second trajet de communication (302) est vérifié ; et
transmettre, afin de transmettre la réponse de vérification de couplage reçue au dispositif de communication (200A - 200H) qui a transmis la requête de vérification de couplage, la réponse de vérification de couplage reçue au dispositif de la pluralité de dispositifs de transport (300A - 300D) à titre de point de départ du second trajet de communication (302), dans un cas de réception de la réponse de vérification de couplage transmise par le dispositif de communication (200A - 200H) à titre de point de bouclage via le dispositif de la pluralité de dispositifs de transport (300A - 300D) à titre de point final du second trajet de communication (302).

11. Ordinateur central de commande selon les revendications 8 ou 9, dans lequel l'ordinateur central (100) est en outre configuré pour :
transmettre, dans un cas d'identification que le point de bouclage de la requête de vérification de couplage reçue est un dispositif de communication (200A - 200H) sur le premier trajet de communication (201) atteint par le routage via le second trajet de communication (302) depuis le dispositif de communication (200A - 200H) qui a transmis la requête de vérification de couplage, afin de transmettre la requête de vérification de couplage au dispositif de communication (200A - 200H) à titre de point de bouclage via le second trajet de communication (302), la requête de vérification de couplage reçue au dispositif de la pluralité de dispositifs de transport (300A - 300D) à titre de point de départ du second trajet de communication (302) ; et
transmettre, afin de transmettre la réponse de vérification de couplage reçue au dispositif de communication (200A - 200H) qui a transmis la requête de vérification de couplage, la réponse de vérification de couplage reçue au dispositif de la pluralité de dispositifs de transport (300A - 300D) à titre de point de départ du second trajet de communication (302) dans un cas de réception de la réponse de vérification de couplage transmise par le dispositif de communication (200A - 200H) à titre de point de bouclage via le dispositif de la pluralité de dispositifs de transport (300A - 300D) à titre de point final du second trajet de communication (302).

12. Ordinateur central de commande selon la revendication 8, dans lequel l'ordinateur central de commande (100) transmet, dans un cas d'identification que le point de bouclage de la requête de vérification de couplage reçue est une pseudo interface qui est fixée à l'un de la pluralité de dispositifs de transport (300A - 300D) couplés au dispositif de communication (200A - 200H) qui a transmis la requête de vérification de couplage, afin de transmettre la réponse de vérification de couplage au dispositif de communication (200A - 200H) qui a transmis la requête de vérification de couplage, la réponse de vérification de couplage au dispositif de la pluralité de dispositifs de transport (300A - 300D) qui a reçu la requête de vérification de couplage.

13. Ordinateur central de commande selon la revendication 8, dans lequel l'ordinateur central de commande (100) donne instruction au dispositif de la pluralité de dispositifs de transport (300A - 300D) à titre de point de départ de vérifier le couplage entre le dispositif de la pluralité de dispositifs de transport (300A - 300D) à titre de point de départ du second trajet de communication (302) et le dispositif de la pluralité de dispositifs de transport (300A - 300D) à titre de point final du second trajet de communication, en utilisant une fonction de vérification de couplage du second protocole de communication, dans un cas où il donne une instruction quant à la vérification de couplage du second trajet de communication (302).

14. Ordinateur central de commande selon la revendication 8, dans lequel l'ordinateur central de commande (100) donne instruction au dispositif de la pluralité de dispositifs de transport (300A - 300D) à titre de point de départ de vérifier le couplage vers tous les dispositifs de transport (300A - 300D) qui sont dans le routage depuis le dispositif de la pluralité de dispositifs de transport (300A - 300D) à titre de point de départ du second trajet de communication (302) vers le dispositif de la pluralité de dispositifs de transport (300A - 300D) à titre de point final du second trajet de communication (302), en utilisant une fonction de vérification de couplage du second protocole de communication, dans le cas où il donne une instruction quant à la vérification du couplage du second trajet de communication (302).

15. Procédé de transport pour transporter des données dans un système de transport, le système de transport ayant :
une pluralité de dispositifs de transport (300A - 300D) destinés à être couplés à un premier trajet de communication (201) qui est établi entre un dispositif de communication (200A - 200H) à titre de point de départ et un dispositif de communication (200A - 200H) à titre de point final, d'une manière autonome et décentralisée en utilisant un paquet de contrôle ; et
un ordinateur central de commande (100) pour établir un second trajet de communication (302) dans un réseau de transport incluant la pluralité de dispositifs de transport (300A - 300D) entre un dispositif de la pluralité de dispositifs de transport (300A - 300D) à titre de point de départ et un dispositif de la pluralité de dispositifs de transport (300A - 300D) à titre de point final, et établir le premier trajet de communication (201) entre les dispositifs de communication (200A - 200H) en fixant une correspondance entre le premier trajet de communication (201) et le second trajet de communication (302) vers un dispositif de la pluralité de dispositifs de transport (300A - 300D) constituant le second trajet de communication (302),
un premier protocole de communication utilisé pour communiquer des données via le premier trajet de communication (201) et un second protocole de communication utilisé pour communiquer des données via le second trajet de communication (302) étant différents l'un de l'autre,
l'ordinateur central de commande (100) étant capable de traiter le premier protocole de communication,
l'ordinateur central de commande (100) fixant, afin qu'une interface d'un dispositif de la pluralité de dispositifs de transport (300A - 300D) couplés au dispositif de communication (200A - 200H) soit reconnue, d'une pseudo manière, comme une interface du dispositif - de communication (200A - 200H) par un dispositif de communication (200A - 200H) d'une destination de couplage, une information d'identification sur l'interface dans le premier protocole de communication vers l'interface du dispositif de la pluralité de dispositifs de transport (300A - 300D) couplés au dispositif de communication (200A - 200H),
le procédé de transport comprenant les étapes consistant à :
transmettre, par un dispositif de la pluralité de dispositifs de transport (300A - 300D), une requête de vérification de couplage pour vérifier le couplage depuis le dispositif de communication (200A - 200H) vers un point de bouclage vers l'ordinateur central de commande (100), dans un cas de réception, depuis le dispositif de communication (200A - 200H), de la requête de vérification de couplage ;
identifier, par l'ordinateur central de commande (100), le point de bouclage en se basant sur la requête de vérification de couplage reçue, dans un cas de réception de la requête de vérification de couplage depuis le dispositif de la pluralité de dispositifs de transport (300A - 300D) ;
donner instruction, par l'ordinateur central de commande (100), selon le point de bouclage identifié, au dispositif parmi la pluralité de dispositifs de transport (300A - 300D) constituant le second trajet de communication (302), de vérifier le couplage du second trajet de communication (3 02) ; et
transmettre, par l'ordinateur central de commande (100) et selon un résultat de la vérification du couplage exécutée par le dispositif de la pluralité de dispositifs de transport (300A - 300D), une réponse de vérification de couplage au dispositif de la pluralité de dispositifs de transport (300A - 300D), la réponse de vérification de couplage étant une réponse à la requête de vérification de couplage à retourner au dispositif de communication (200A - 200H) qui a transmis la requête de vérification de couplage.
